# EUROPÄISCHE PATENTSCHRIFT

(11) **EP 0 472 109 B1**
(45) Veröffentlichungstag und Bekanntmachung des Hinweises auf die Patenterteilung: **26.01.1994**
(21) Anmeldenummer: 91113658.8
(22) Anmeldetag: 14.08.1991
(51) Int. Cl.: E06B 3/54

(54) **Anordnung von Halterungsprofilen zur Befestigung einer Glasscheibe**
System of profiles for fixing glass panes
Système de profilés pour fixage des vitres

(30) Priorität: 20.08.1990 DE 4026294; 09.01.1991 DE 4100450
(43) Veröffentlichungstag der Anmeldung: 26.02.1992
(73) Patentinhaber: Josef Gartner & Co., D-89421 Gundelfingen (DE)
(72) Erfinder:
(74) Vertreter: Müller-Boré & Partner Patentanwälte

(56) Entgegenhaltungen:
- EP-A- 0 301 166
- DE-A- 3 624 491
- DE-A- 3 728 016
- DE-A- 3 808 513
- DE-A- 3 810 200
- DE-U- 8 708 954
- FR-A- 2 619 587
- FR-A- 2 653 158
- GB-A- 2 155 981
- US-A- 4 447 985

## Beschreibung

Die vorliegende Erfindung betrifft eine Anordnung von Halterungsprofilen zur Befestigung einer Glasscheibe, inbesondere einer Außenwand- oder Dachverglasung, an einer Fassadenunterkonstruktion gemäß Anspruch 1.

Bei Glasscheiben in beispielsweise einer Außenwandverglasung, ist es erforderlich, zumindest den unteren und oberen Glasscheibenrand mit einem Halterungsprofil abzustützen bzw. zu sichern, wenn die Glasscheibe an der Fassadenunterkonstruktion ohne Verklebung angeordnet sein soll. Auch bei Glasscheiben, die an der Fassadenunterkonstruktion mittels Verklebung angebracht sind, ist es erforderlich, zumindest die oberen und unteren Glasscheibenränder durch Halterungsprofile zusätzlich zu sichern, wobei ein Teil des Halterungsprofils den Glasscheibenrand auf der Wetterseite umfassen muß, damit die Glasscheibe beim Versagen der Verklebung, z.B. im Brandfall, weiterhin an der Fassadenunterkonstruktion gehalten wird.

Aus der DE-OS 38 08 513 ist eine Anordnung eines Halterungsprofiles zum Befestigen der Glasscheiben einer Doppelverglasung bekannt, wobei die auf der Wetterseite angeordnete Glasscheibe auf der Außenseite einen stufenförmigen Absatz aufweist, in welchen eine äußere Abwinklung des Halterunsgsprofiles eingreift. Das Halterungsprofil der bekannten Anordnung ist ein Teil der Fassadenunterkonstruktion. Der Glasscheibenrand der außenliegenden Glasscheibe wird von dem Halterungsprofil auf der Wetterseite und im Glasrandbereich umfaßt. Zwischen der zur Raumseite weisenden Glasfläche und einem dahinter angeordnetem Stabilisierungssteg des Halterungsprofiles ist eine elastische Klebemasse eingebracht, wodurch es dem unteren Glasscheibenrand ermöglicht wird, bei Winddruck oder -sog eine Drehbewegung im Halterungsprofil durchzuführen.

Bei dieser bekannten Anordnung stützt sich beispielsweise bei Windsog die Glasscheibe an dem freien Ende der äußeren Abwinklung des Halterungsprofiles ab und führt um diesen Punkt bzw. um diese fiktive Drehachse eine Drehbewegung aus. Dabei besteht die Gefahr, daß der Glasscheibenrand aus dem Halterungsprofil herausrutscht. Außerdem entstehen durch diese Drehbewegung bzw. durch das Abstützen des Glasscheibenrandes an dem freien Ende der äußeren Abwinklung entstehen Spitzenbelastungen im Glasrandbereich, die zu einem Glasbruch führen können. Bei Winddruck entsteht zwar durch die Anordnung der elastischen Klebemasse keine Zwängung auf der Rückseite, jedoch bewegt sich der untere Glasscheibenrand von der äußeren Abwinklung des Halterungsprofiles weg. Hierbei können ebenfalls Spitzenbelastungen an der inneren Glaskante zu Glasbruch führen. Außerdem kann dann Regenwasser oder Feuchtigkeit in den Bereich zwischen dem Halterungsprofil und der Glasunterkante eintreten, was nicht gewünscht ist. Schließlich biegen sich die Glasscheibenränder bei der Verformung der Glasscheibe aufgrund von Windsog oder Winddruck durch. Ein solches Durchbiegen führt bei der bekannten Anordnung zum Aufschnabeln zwischen Glasscheibenrand und äußerer Abwinklung des Halterungsprofils, was zu Undichtigkeiten führt.

Es ist Aufgabe der vorliegenden Erfindung, eine auf Dauer sicherere Halterung von Glasscheiben, insbesondere an einer Fassadenunterkonstruktion, durch Anordnung von Halterungsprofilen zu erreichen, bei der ein Brechen im Bereich der Glasränder verhindert wird, während es zusätzlich möglich ist, auf eine Verklebung der Glasscheiben an der Fassadenunterkonstruktion zu verzichten.

Diese Aufgabe wird durch die Merkmale des Anspruchs 1 gelöst.

Eine auf Dauer sichere Halterung von Glasscheiben wird dann erreicht, wenn der Glasscheibenrand von außen und innen in einem Profil mit je einer Abwinklung fest anliegend umfaßt wird. Eine solche Umfassung des Glasscheibenrandes ist bislang nicht vorgeschlagen worden, da die Zwängungen im Bereich zwischen einem so ausgebildeten Halterungsprofil und dem umgriffenen Glasscheibenrand so groß sind, daß bei Winddruck oder -sog mit einem Brechen im Bereich der Glasscheibenränder gerechnet werden muß. Erfindungsgemäß wird dieses Problem umgangen, indem jedes Halterungsprofil außerhalb der Glasscheibenrandes so ausgebildet bzw. angeordnet bzw. abgestützt ist, daß es eine vorbestimmte Drehbewegung um eine zum Glasscheibenrand parallele, außerhalb von diesem liegende Drehachse zuläßt. Diese Drehachse kann sich dabei körperlich oder auch fiktiv in bestimmten Bereichen außerhalb des Glasscheibenrandes bilden. Ein wesentlicher Effekt der Erfindung besteht darin, daß jedes Halterungsprofil zusammen mit dem fest eingefaßten Glasscheibenrand eine Drehbewegung durchführen kann und dabei Spitzenbelastungen im Glasscheibenrand vermieden werden. Durch diese Drehbewegungen der Halterungsprofile zusammen mit dem fest eingefaßten Glasscheibenrand werden die im Glasscheibenrand aufgrund von Zwängungen im Halterungsprofil auftretenden Momente auf einen Betrag abgebaut, bei dem ein Brechen der Glasscheibenränder ausgeschlossen ist.

Außerdem ist jedes Halterungsprofil in Verbindung mit der es tragenden Unterkonstruktion bzw. dem Spiel zwischen Halterungsprofil und Unterkonstruktion biegeelastisch ausgebildet bzw. angeordnet, so daß es einer Durchbiegung des Glasscheibenrandes innerhalb vorbestimmter Grenzen folgend nachgeben kann. In Verbindung mit der erfindungsgemäß vorgesehenen festen Anlage der Abwinklungen jedes Halterungsprofils an dem Glasscheibenrand wirkt die vorstehend erläuterte biegeelastische Ausbildung der Halterungsprofile und deren biegeelastische Bewegungen zulassende Anordnung an der Fassadenunterkonstruktion, gegebenenfalls mit Spiel zwischen Halterungsprofil und Unterkonstruktion eine entsprechende Rolle.

Aus ästhetischen Gesichtspunkten ist es bei einer vorteilhaften Ausgestaltungsform der Erfindung vorgesehen, daß die äußere Abwinklung des Halterungsprofiles in einen abgesetzten Rand bzw. eine Stufe des Glasscheibenrandes eingreift, so daß die Wetterseite der Glasscheibe und die Außenseite der äußeren Abwinklung bündig in einer Ebene liegen.

Die innere Abwinklung des Halterungsprofiles kann dabei gleichfalls in eine Stufe des Glasscheibenrandes eingreifen.

Vorteilhafterweise weist das Halterungsprofil im Bereich des Glasscheibenrandes eine im Querschnitt im wesentlichen U-förmige Ausgestaltung auf, bei welcher die innere Abwinklung höher ist als die äußere Abwinklung.

Um eine günstige Anlage bzw. ein festes Einklemmen des Halterungsprofils am Glasscheibenrand zu erreichen, ist das Halterungsprofil vor dem Einsetzen vorgebogen. Beim Einsetzen der Glasscheiben in das Halterungsprofil muß dementsprechend das Halterungsprofil zunächst elastisch aufgebogen werden, um eine dauerhafte Vorspannung der Verbindung herzustellen.

Eine zusätzliche Vermeidung von Spitzenbelastungen im Glasscheibenrand wird dadurch erreicht, daß die der Glasscheibe zugewandte, vom Glasscheibenabschlußbereich entfernt liegende Kante der äußeren und/oder Abwinklung abgerundet ist.

Ein sicheres Festklemmen der Glasscheibe im Halterungsprofil und das Verhindern eines Herausrutschens der Glasscheibe aus dem Halterungsprofil wird vorteilhafterweise dadurch erreicht, daß die der Glasscheibe zugewandte Fläche der inneren und/oder äußeren Abwinklung von ihrer vom Glasscheibenabschlußbereich entfernt liegenden Kante keilförmig zum Glasscheibenabschlußbereich hin verjüngt ausgebildet ist. Der durch die Stufen verjüngt ausgebildete untere Glasscheibenrandbereich weist dementsprechend eine keilförmige Ausbildung auf und ist dadurch sicher in dem Halterungsprofil gehalten.

Eine dichte Anlage der Kanten des Glasscheibenabschlußbereichs des unteren Glasscheibenrandes im Halterungsprofil wird dadurch erreicht, daß der Übergang der äußeren und/oder inneren Abwinklung zu dem dazwischen angeordneten Verbindungssteg des Halterungsprofils abgerundet ausgeformt ist, da auch die entsprechenden Kanten des Glasscheibenabschlußbereiches aus herstellungstechnischen Gründen eine eher abgerundete Form aufweisen können.

Eine zusätzliche Sicherung der Glasscheibe im Halterungsprofil wird durch Halterungseinrichtungen zwischen dem Halterungsprofil und dem Glasscheibenrand erreicht. Solche Halterungseinrichtungen können bevorzugterweise dadurch geschaffen werden, daß die äußere und/oder innere Abwinklung auf der der Glasscheibe zugewandten Fläche zumindest eine durchgehende oder unterbrochene Erhöhung aufweisen, wobei der Glasscheibenrand an den entsprechenden Stellen Rillen bzw. Vertiefungen aufweist.

Anstelle von Rillen können die Halterungssicherungen auch aus an der äußeren und/oder inneren Abwinklung auf der der Glasscheibe zugewandten Fläche in Form von zumindest einer, vorteilhafter Weise in einer Ebene angeordneten, Reihe von Noppen bestehen, wobei der Glasscheibenrand an den entsprechenden Stellen eine durchlaufende Rille oder Vertiefungen aufweist.

Schließlich können auch in umgekehrter Weise am Glasscheibenrand Erhöhungen, beispielsweise aus Emaille im Siebdruckverfahren hergestellt, vorgesehen sein, die in entsprechenden durchlaufende Rillen oder Vertiefungen auf den der Glasscheibe zugewandten Flächen der äußeren und/oder inneren Abwinklung eingreifen.

Das Eindringen von Feuchtigkeit zwischen Glasscheibenrand und Halterungsprofil wird vorteilhafterweise durch eine Abdichtung zumindest im Bereich des freien Endes der äußeren Abwinklung des Halterungsprofils geschaffen. Die Abdichtung besteht dabei beispielsweise aus Silikon oder einem anderen dauerelastischen Dichtstoff.

Eine feste Verbindung zwischen dem Halterungsprofil und dem Glasscheibenrand kann auch dadurch geschaffen werden, daß zumindest Teile der dem Glasscheibenrand zugewandten Flächen des Halterungsprofils einen reibungserhöhenden Belag und/oder einen Kleber aufweisen.

Aus statischen und/oder ästhetischen Gesichtspunkten ist das Halterungsprofil vorzugsweise aus Edelstahl, insbesondere schwarz elektrolytisch gefärbt, oder aus Aluminium, vorzugsweise eloxiert, hergestellt. Somit kann das Halterungsprofil auch im Srangpressverfahren auf einfachere Weise hergestellt werden.

Um das Auftreten von Momenten und Spitzenbelastungen im Bereich des Glasscheibenrandes durch die Anordnung des Halterungsprofils möglichst gering zu halten, ist die Drehachse, um welche die vorbestimmte Drehbewegung erfolgt, vorteilhafterweise so gering wie möglich vom Glasscheibenrand beabstandet. Dadurch wird der Hebelarm von der Drehachse zum Glasscheibenrand gering gehalten, was in der Folge zu kleinen Momenten im Bereich des Glasscheibenrandes führt.

Es kann auch eine aus zwei oder mehreren Einzelscheiben bestehende Verbundglasscheibe oder eine aus Einzelscheiben mit dazwischen angeordneten photovoltaischen Elementen bestehende Glasscheibe mit dem Halterungsprofil versehen werden. Da das im Bereich zwischen den Einzelscheiben vorgesehene Material - Kunststoff oder Gießharz, beispielsweise bei der Verbundglasscheibe und eine Folienzwischenlage mit eingelegten photovoltaischen Elementen bei der photovoltaische Elemente aufweisenden Glasscheibe - im Verhältnis zur Glasscheibe relativ weich und somit zusammenpreßbar ist, sind im Bereich zwischen der äußeren und inneren Abwinklung des Halterungsprofils Mittel angeordnet, die ein Zusammenpressen des Glasscheibenrandes in diesem Bereich verhindern.

Die Mittel zum Verhindern des Zusammenpressens können aus druckfesten Einlagen bestehen, die jeweils zwischen den Einzelscheiben der Glasscheibe angeordnet sind oder aus freien Zapfen bestehen, die fest mit dem Verbindungssteg des Halterungsprofis verbunden sind. Die druckfesten Einlagen wie auch die freien Zapfen weisen dabei eine Querschnittsbreite auf, die der Stärke des jeweils zwischen den Einzelscheiben befindlichen Materials entspricht.

Vorzugsweise ist die jeweilige Querschnittshöhe der druckfesten Einlagen bzw. der freien Zapfen wenigstens der Querschnittshöhe der äußeren Abwinklung des Halterungsprofils entsprechend ausgebildet. Bevorzugt kann die Querschnittshöhe auch der der inneren Abwinklung des Halterungsprofils entsprechen.

Bei einer Doppelverglasung bzw. bei einem Paneel mit als Deckscheibe wetterseitig angeordneter Glasscheibe ist es lediglich erforderlich, die auf der Wetterseite angeordnete Glasscheibe mit einem Halterungsprofil zu versehen. Vorteilhafterweise und zur Vermeidung der beschriebenen Spitzenbelastung bzw. der Momente im Glasscheibenrandbereich ist es dabei vorgesehen, daß die Drehachse zwischen den beiden Glasscheiben bzw. im Bereich des Paneels, vorzugsweise von der auf der Wetterseite angeordneten Glasscheibe so gering wie möglich beabstandet, angeordnet ist.

Aus statischen Gründen oder anderen Gesichtspunkten kann es jedoch auch zugelassen werden, daß die Drehachse hinter der auf der Raumseite angeordneten Glasscheibe einer Doppelverglasung bzw. hinter dem raumseitigen Abschluß des Paneels angeordnet ist bzw. ausgebildet wird und dabei vorteilhafterweise so gering wie möglich von dieser raumseitig angeordneten Glasscheibe bzw. dem raumseitigen Paneelabschluß beabstandet angeordnet ist, um, wie erläutert, die Spitzenbelastungen bzw. Momente im Glasscheibenrand zu minimieren.

Zur Verhinderung von Spitzenbelastungen bzw. Momenten im Glasscheibenrandbereich der auf der Raumseite angeordneten Glasscheibe bzw. des hinter der wetterseitigen Glasscheibe angeordneten Paneelbereichs ist diese bzw. dieser vorzugsweise schwimmend gelagert bzw. elastisch gebettet. Bei einer Drehbewegung kann der Glasscheibenrand der auf der Raumseite angeordneten Glasscheibe bzw. der entsprechende Rand des Paneelbereichs dann zwängungsfrei eine Verdrehbewegung ausführen.

Vorzugsweise ist die Drehachse im Bereich eines den Wärmeübergang zwischen dem Halterungsprofil und der Fassadenunterkonstruktion verhindernden wärmeisolierenden Elementes, insbesondere eines Kunststoffteils und/oder im Bereich einer besonders ausgestalteten Verbindungsstelle zwischen dem Halterungsprofil und der Fassadenunterkonstruktion angeordnet bzw. bildet sich die Drehachse vorteilhafterweise in den vorgenannten Bereichen aus. Es können somit bekannte Elemente Verwendung finden, in deren Bereich sich die Drehachse aufgrund der Elastizität dieser Elemente ausbilden kann.

Vorteilhafterweise verringern das isolierende Element und/oder die Verbindungsstelle die übertragenen Momente zum Glasscheibenrandbereich, um ein Brechen des Glasscheibenrands auszuschließen.

Die vorbestimmte Drehbewegung des Halterungsprofils wird vorzugsweise dadurch erleichtert, daß das isolierende Element an dem Halterungsprofil und/oder der Fassadenunterkonstruktion über ein abgerundetes Teil in der Art eines Drehgelenks angeordnet ist.

Eine vorbestimmte Drehbewegung des Halterungsprofiles wird mit Vorteil zusätzlich gefördert, wenn die Steifigkeit des isolierenden Elementes um die sich ausbildenden Drehachse möglichst gering ist.

Eine geringe Steifigkeit um die Drehachse ist inbesondere dann zu erreichen, wenn die parallel zur Glasscheibenebene verlaufende Querschnittshöhe des isolierenden Elementes geringer ist als dessen Querschnittsbreite, vorteilhafterweise ein Drittel bis die Hälfte geringer.

Als günstig für die vorbestimmte Drehbewegung hat es sich erwiesen, wenn das isolierende Element eine Verjüngung, vorzugsweise in der Mitte des Querschnitts aufweist.

In einer besonderen Ausgestaltung der Erfindung besteht die Verbindungsstelle aus einer Einhängung des Halterungsprofiles in die Fassadenunterkonstruktion, wodurch eine einfache Ausgestaltung der Verbindungsstelle und eine leichte Montage erreicht wird.

Vorzugsweise besteht die Verbindungsstelle aus einem von der inneren Abwinklung beabstandeten, sich in Richtung des Glasscheibenrandes oder von diesem weg erstreckenden Ansatzstück des Halterungsprofiles, welches in eine entsprechend ausgeformte Aussparung eines Profilteils der Fassadenunterkonstruktion eingreift, und einem das Halterungsprofil und das Ansatzstück verbindenden Verbindungsteil, wobei das Ansatzstück und das Halterungsprofil vorzugsweise Spiel aufweisen, um die vorbestimmte Drehbewegung des Halterungsprofils durch das Spiel und/oder die Elastizität von Ansatzstück und Verbindungsteil zu ermöglichen. Damit sich die Drehachse für die vorbestimmte Drehbewegung auch im Bereich der Verbindungsstelle einstellen kann, wird durch spezielle Ausgestaltungen dieser Verbindungsstelle dafür gesorgt, daß sich die Drehachse in diesem Bereich problemlos ausbilden kann. Dabei ist es insbesondere erforderlich, daß zwischen dem Halterungsprofil und dem Ansatzstück eine zwängungsfreie Anordnung vorgesehen wird.

Mittels einem vorzugsweise einen bogenförmigen Querschnitt aufweisenden Ansatzstück wird die vorbestimmte Drehbewegung zusätzlich erleichtert, da sich im Bereich der Verbindungsstelle aufgrund der Ausgestaltung des Ansatzstückes eine Art Drehgelenk ausbildet. Diese vorteilhafte Ausbildungsform ermöglicht auch Dehnungen oder Verkürzungen der Glasscheibe bzw. der Glasscheiben, da im Bereich der Verbindungsstelle zwängungsfrei Längsverschiebungen in Richtung der Glasscheibenebene auftreten können.

Ein vorzugsweise bogenförmiger Querschnitt des Ansatzstückes unterstützt die vorbestimmte Drehbewegung, da sich im Bereich der Verbindungsstelle eine Art Drehgelenk ausbildet.

Die Verbindungsstelle kann auch aus einem Längsschiebegelenk, insbesondere in Form einer Steckverbindung, mit einem senkrecht zur Scheibenebene verlaufenden Steg und einer diesen umgreifenden Ausnehmung bestehen, wobei zwischen dem Steg und der Ausnehmung ein elastisches Material angeordnet ist, um die vorbestimmte Drehbewegung des Halterungsprofils durch die Anordnung des elastischen Materials und/oder die Elastizität des Stegs zu ermöglichen. Mit dieser Ausbildungsform wird eine sehr einfach ausgebildete Verbindungsstelle geschaffen, wobei es zusätzlich möglich ist, auf ein den Wärmeübergang verhinderndes isolierendes Element zu verzichten, da die Anordnung des elastischen Materials zusätzlich einen Wärmeübergang verhindert.

Für eine zusätzliche Eigengewichtsabtragung und/oder als Sicherung für den Brandfall sind vorteilhafterweise metallische Formstücke am Glasscheibenrand, vorzugsweise am Halterungsprofil, zwischen der Glasscheibe und der Fassadenunterkonstruktion angeordnet. Bei einer Befestigung der metallischen Formstücke mittels einer Schraubverbindung kann es zusätzlich vorgesehen sein, daß die einzelnen Schrauben Spiel aufweisen, um dadurch die erforderliche vorbestimmte Drehbewegung nicht zu behindern.

Als Sicherung für den Brandfall können auch Teile des isolierenden Elementes aus Metall bestehen, wobei diese, lediglich abschnittsweise vorgesehen Teile, die vorbestimmte Drehbewegung des Halterungsprofiles nicht behindern, auch wenn sich die Drehachse im Bereich der isolierenden Elemente ausbildet.

Aus statischen und/oder ästhetischen Gesichtspunkten kann es gewünscht bzw. erforderlich sein, daß die Halterungsprofile an allen Glasscheibenrändern der Glasscheibe angeordnet sind.

Vorteilhafterweise können die Halterungsprofile aus ästhetischen Gründen an den Glasscheibenrändern bis in die Eckbereiche der Glasscheibe durchgehend angeordnet sein. Damit sich die Halterungsprofile in den Eckbereichen zwängungsfrei dehnen können, sind die freien Enden der Halterungsprofile in den Eckbereichen voneinander beabstandet.

Vorzugsweise sind in den Eckbereichen der Glasscheibe, an die Halterungsprofile anschließend, Dehnungsaufnahmeteile bzw. Eckformteile, insbesondere in Form von Elastomerteilen oder Edelstahlteilen, angeordnet. Diese Eckformteile übergreifen die freien Enden der Halterungsprofile 6 und sorgen dafür, daß sich die Dehnungen der Halterungsprofile zwängungsfrei einstellen können.

Die erfindungsgemäße Anordnung der Halterungsprofile eignet sich vorteilhafterweise zur Verwendung bei Einfach- oder Mehrfachglassystemen, wobei die Scheibenabmessungen bei Mehrfachglassystemen unterschiedliche Abmessungen aufweisen können. Mit der vorgeschlagenen Anordnung von Halterungsprofilen können demnach sämtliche Scheibensysteme versehen werden.

Im folgenden soll die Erfindung beispielhaft an vorteilhaften Ausgestaltungen gemäß der nachfolgenden Figuren erläutert werden. Es zeigen dabei:
- Fig. 1: einen Querschnitt durch ein an einem Glasscheibenrand angeordnetes Halterungsprofil
- Fig. 2: einen Querschnitt durch ein Halterungsprofil;
- Fig. 3 - 9: Querschnitte gemäß Fig. 1 mit jeweils anderen Halterungsprofilen
- Fig. 10 u. 11: Querschnitt von Randbereichen einer aus mehreren Einzelscheiben bestehenden Verbundglasscheibe, versehen mit einem Halterungsprofil
- Fig. 12 u. 13: Querschnitte von Randbereichen einer Glasscheibe aus zwei Einzelscheiben mit dazwischen angeordneten photovoltaischen Elementen, versehen mit einem Halterungsprofil;
- Fig. 14 u. 15: verschiedene Querschnitte von Randbereichen einer Doppelverglasung in stufiger Ausbildung mit Halterungsprofil, wärmeisolierendem Element zur Verhinderung der Wärmeübertragung und Teilen der Fassadenunterkonstruktion;
- Fig. 16: einen Querschnitt eines Randsbereichs eines Paneels mit einer Glasscheibe als Deckscheibe, die ein Halterungsprofil aufweist;
- Fig. 17 u. 18: verschiedene Querschnitte gemäß den Fig. 14 und 15 mit besonders ausgestalteten isolierenden Elementen;
- Fig. 19 - 22: verschiedene Querschnitte gemäß den Fig. 14 bis 16 mit einer zusätzlichen Verbindungsstelle zwischen Halterungsprofil und Fassadenunterkonstruktion;
- Fig. 23: einen Querschnitt gemäß den Figuren 14 und 15 jedoch ohne isolierendes Element;
- Fig. 24 - 26: einen Querschnitt gemäß den Figuren 14 und 15 bei einer Doppelverglasung ohne stufige Ausbildung;
- Fig. 27 u. 28: stark schematische Querschnitte gemäß den Fig. 14 und 15 bei einer Einfachverglasung; und
- Fig. 29: eine Draufsicht auf einen Eckbereich einer Glasscheibe mit an den Glasscheibenrändern durchlaufenden Halterungsprofilen.

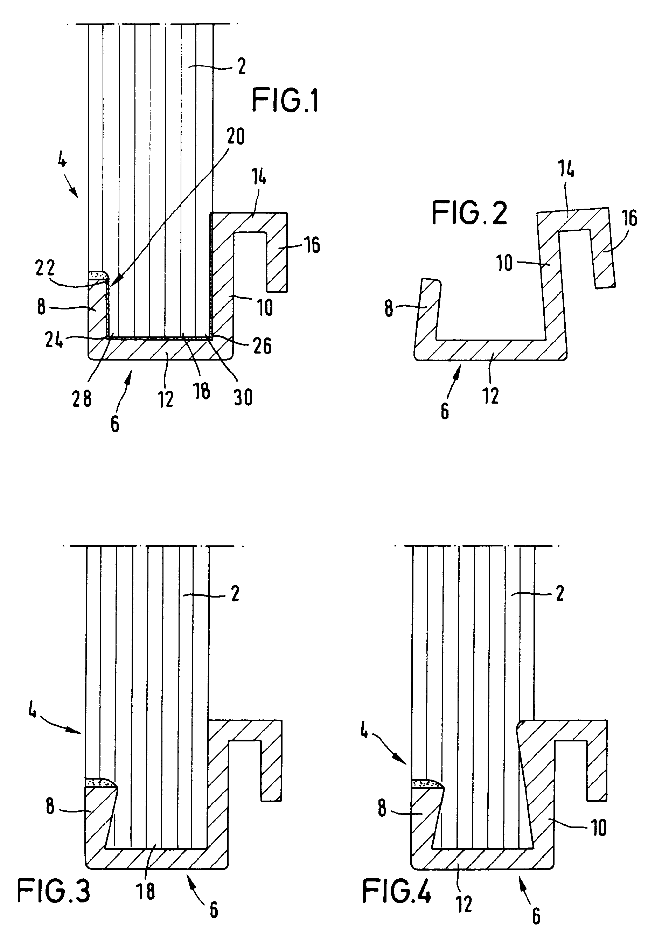

Fig. 1 zeigt einen Querschnitt durch eine Glasscheibe 2 mit einem am Glasscheibenrand 4 angeordneten Halterungsprofil 6. Bei der dargestellten Glasscheibe 2 kann es sich um eine Glasscheibe einer Einfachverglasung oder um die auf der Wetterseite angeordnete Glasscheibe einer Mehrfachverglasung handeln, die Elemente beispielsweise einer Außenwand- oder Dachverglasung darstellen können. Das Halterungsprofil 6 weist im Bereich des Glasscheibenrandes 4 einen im wesentlichen U-förmigen Querschnitt, bestehend aus einer äußeren Abwinklung 8, angeordnet auf der Wetterseite, einer inneren Abwinklung 10 und einem die beiden Abwinklungen 8, 10 verbindenden Verbindungssteg 12 auf. An die innere Abwinklung 12 schließt sich über ein Verbindungsteil 14 ein Ansatzstück 16 an, welches von der inneren Abwinklung 10 beabstandet ist und im wesentlichen parallel zu diesem sich in Richtung eines Glasscheibenabschlußbereiches 18 erstreckt. Die äußere und innere Abwinklung 8, 10 umfassen den Glasscheibenrand 4 fest anliegend, wobei der Verbindungssteg 12 ebenfalls dicht an dem Glasscheibenabschlußbereich 18 anliegt. Das Halterungsprofil 6 ist mit seinem Verbindungssteg 12 in einer Fassadenunterkonstruktion eingehängt.

Das gezeigte Halterungsprofil 6 ist wenigstens an zwei sich gegenüberliegenden Rändern der Glasscheibe 2 angebracht, also beispielsweise an den horizontal verlaufenden oberen und unteren Rändern der Glasscheibe 2 oder auch an den vertikal verlaufenden seitlichen Rändern der Glasscheibe 2. Aus statischen oder ästhetischen Gesichtspunkten kann das Halterungsprofil 6 jedoch auch an drei oder allen vier Rändern der Glasscheibe 2 angeordnet sein. An den jeweiligen Rändern der Glasscheibe 2 kann das Halterungsprofil 6 dabei abschnittsweise oder bis in die Eckbereiche der Glasscheibe 2 reichend vorgesehen sein.
Die Glasscheibe 2 weist im unteren Bereich des Glasscheibenrandes 4 auf der Wetterseite eine Ausnehmung oder Stufe 20 auf, in welche die äußere Abwinklung 8 so eingreift, daß die Wetterseite der Glasscheibe 2 und die Außenseite der äußeren Abwinklung 8 in einer Ebene liegen. Die der Glasscheibe 2 zugewandte obere Kante 22 der äußeren Abwinklung 8 ist abgerundet wie auch die Stufe 20 der Glasscheibe 2 in diesem Bereich. Vorteilhafterweise sind auch die Übergangsbereiche der äußeren und inneren Abwinklung 8, 10 zu dem dazwischen angeordneten Verbindungssteg 12 abgerundet ausgeformt wie auch die Glasscheibenabschlußkanten 28, 30 in diesem Bereich.

Zwischen dem Halterungsprofil 6 und dem Glasscheibenrand 4 ist zumindest im Bereich des freien Endes der äußeren Abwinklung 8 eine Abdichtung vorgesehen. Zur besseren Verbindung weist das Halterungsprofil 6 auf seinen, dem Glasscheibenrand 4 zugewandten Flächen einen reibungserhöhenden Belag und/oder einen Kleber, beispielsweise einen 2-Komponenten-Epoxy-Kleber auf. Wie dargestellt ist die inneren Abwinklung 10 länger bzw. höher als die äußere Abwinklung 8.

In Fig. 2 ist ein Querschnitt durch das Halterungsprofil 6 vor dem Anbringen an dem Rand einer Glasscheibe gezeigt, welches zur besseren Verbindung mit dem entsprechenden Glasscheibenrand vorgebogen ist. Ersichtlicherweise muß das Halterungsprofil 6 vor dem Einbringen einer Glasscheibe aufgeklemmt werden. Die verbleibende Spannung sorgt für eine Erhöhung der Verbindung zwischen dem Halterungsprofil 6 und dem entsprechenden Rand einer Glasscheibe.

Das Halterungsprofil 6 ist beispielsweise aus Edelstahl oder Aluminium hergestellt und vorzugsweise schwarzelektrolytisch gefärbt bzw. eloxiert, so daß es der farblichen Ausgestaltung der Glasscheiben, beispielsweise einer Außenfassade, angepaßt werden kann.

Die Figuren 3 bis 9 zeigen Querschnitte gemäß Fig. 1 mit jeweils anders ausgestalteten Halterungsprofilen 6, wobei für die identischen Teile die Ziffern aus Fig. 1 übernommen werden.

In Fig. 3 ist gezeigt, daß die Verbindung zwischen dem Halterungsprofil 6 und dem Glasscheibenrand 4 der Glasscheibe 2 dadurch erhöht werden kann, daß sich die äußere Abwinklung 8 von ihrem freien Ende aus in Richtung des Glasscheibenabschlußbereichs 18 hin keilförmig verjüngt.

In Fig. 4 ist gezeigt, daß auch die innere Abwinklung 10 eine solche keilförmige Ausgestaltung aufweisen kann, so daß die äußere Abwinklung 8, der Verbindungssteg 12 und die innere Abwinklung 10 eine Schwalbenschwanznut bilden, in welche der entsprechend ausgeformte Glasscheibenrand 4 der Glasscheibe 2 eingreift.

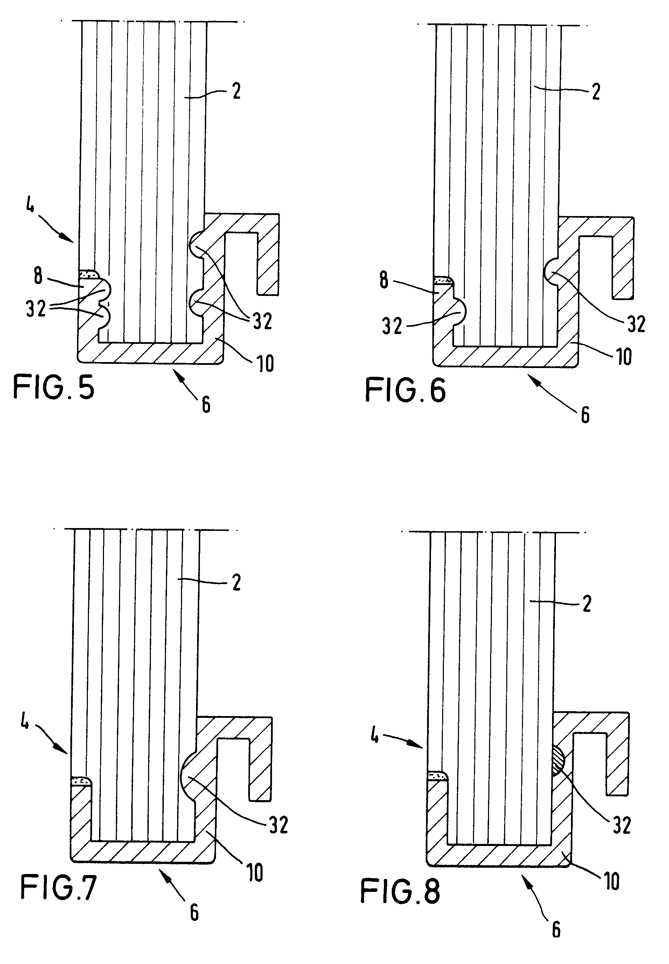

Zusätzlich zu den besonderen Ausgestaltungsformen gemäß der Figuren 3 und 4 kann das Halterungsprofil 6 auch noch weitere, einen Formschluß herstellende Halterungseinrichtungen, wie in den Figuren 5 bis 8 gezeigt, aufweisen. Die gezeigten Halterungseinrichtungen können jedoch auch unabhängig von der Keilform gemäß den Figuren 3 und 4 vorgesehen sein.

Fig. 5 zeigt an den dem Glasscheibenrand 4 zugewandten Flächen der äußeren und inneren Abwinklung 8, 10 ausgebildete Erhöhungen 32, die durchgehend oder unterbrochen an den entsprechenden Flächen angebracht sein können. In Fig. 5 sind beispielsweise die Erhöhungen 32 an der äußeren und inneren Abwinklung 8, 10 paarweise angeordnet. In entsprechender Weise ist der Glasscheibenrand 4 der Glasscheibe 2 mit Ausnehmungen bzw. Vertiefungen versehen, in welche die Erhöhungen 32 eingreichen. Die Vertiefungen werden dabei in den Glasscheibenrand 4 eingeschliffen Es kann sich bei den Erhöhungen 32 auch um einzelne, beabstandete Noppen handeln, die entweder in durchlaufende Vertiefungen des Glasscheibenrandes 4 oder einzelne Vertiefungen eingreifen. Einzelne bzw. punktförmige Vertiefungen im Glasscheibenrand 4 können durch einen Punktbohrer eingeschliffen werden.

Fig. 6 zeigt, daß die Erhöhungen 32 auch einzeln an den dem Glasscheibenrand 4 zugewandten Flächen der äußeren und inneren Abwinklung 8, 10 angeordnet sein können. Die gezeigten Erhöhungen 32 dienen einer zusätzlichen Halterungssicherung zwischen dem Halterungsprofil 6 und dem Glasscheibenrand 4 der Glasscheibe 2.

Eine weitere Variante ist in Fig. 7 gezeigt, wobei die Erhöhung 32 lediglich an der inneren Abwinklung 10 angeordnet ist. Aus herstellungstechnischen Gründen ist es vorteilhaft, wenn die Erhöhung 32 aus einer durchgehenden oder durchlaufenden Erhöhung besteht, die in eine entsprechend durchlaufende Vertiefung am Glasscheibenrand 4 eingreift.

In Fig. 8 ist dargestellt, daß auch der Glasscheibenrand 4 der Glasscheibe 2 die Erhöhung 32 aufweisen kann, die dann in eine entsprechend geformte Vertiefung der inneren Abwinklung 10 eingreift. Diese, vorzugsweise durchlaufende Erhöhung 32 wird im Siebdruckverfahren, insbesondere aus Emaille, hergestellt bzw. am Glasscheibenrand 4 aufgebracht. Sämtliche vorgenannten Erhöhungen 32, Vertiefungen und Anordnungen von Noppen sowie einzelnen Vertiefungen verlaufen dabei vorteilhafterweise parallel zum Glasscheibenrand 4.

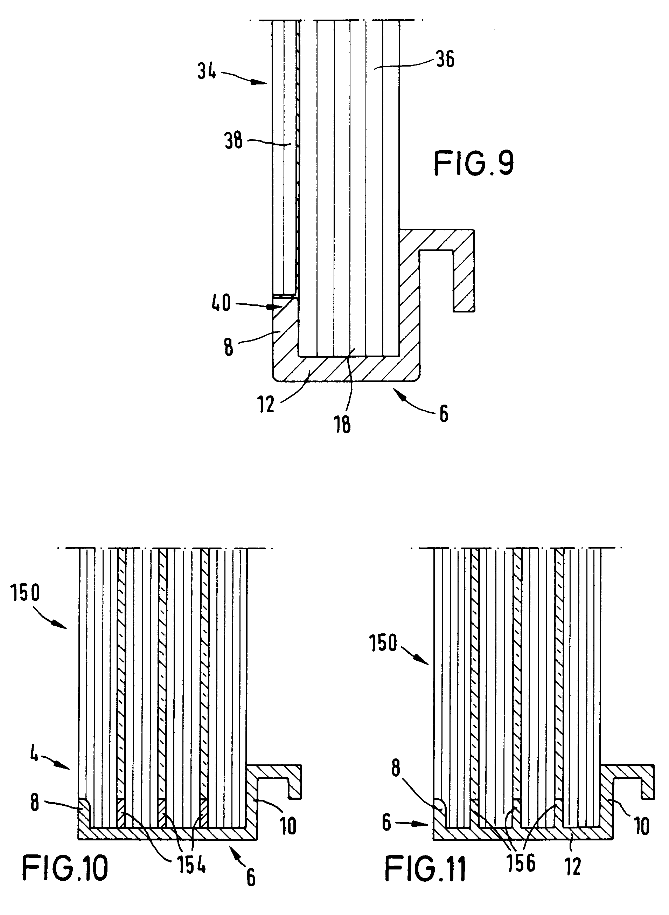

Fig. 9 zeigt die Verwendung des Halterungsprofil 6 bei einer Verbundglasscheibe 34, die aus einer auf der Raumseite angeordneten, inneren Glasscheibe 36 und einer auf der Wetterseite angeordneten, äußeren Glasscheibe 38 besteht, wobei die Dicke der äußeren Glasscheibe 38 in etwa der Querschnittsdicke der äußeren Abwinklung 8 entspricht. Zwischen der inneren Glasscheibe 36 und der äußeren Glasscheibe 38 ist eine durchsichtige Klebefolie oder auch eine durchsichtige Gießharzschicht vorhanden. Die äußere Glasscheibe 38 ist in Bezug auf die innere Glasscheibe 36 an den Rändern umlaufend kleiner ausgebildet, an welchen ein Halterungsprofil 6 angeordnet werden soll. In die durch diese Ausbildung entstehende umlaufend Stufe greift die äußere Abwinklung 8 ein, so daß die äußere Glasscheibe 38 und die äußere Abwinklung 8 in einer Ebene liegen. Die Abmessung der Stufe 40 ist dabei so gewählt, daß der Glasscheibenabschlußbereich 18 und der Verbindungssteg 12 ohne Zwischenraum aneinanderliegen.

Fig. 10 zeigt die Verwendung des Halterungsprofils 6 bei einer Verbundglasscheibe 150, die aus mehreren Einzelscheiben mit jeweils zwischen den Einzelscheiben angeordneter durchsichtiger Klebefolie oder auch durchsichtiger Gießharzschicht besteht. Im Gegensatz zu Fig. 9 sind die Einzelscheiben im unteren Glasscheibenrand 4 gleich lang ausgebildet. Somit befindet sich das zwischen den Einzelscheiben angeordnete Material auch im Bereich zwischen der äußeren und inneren Abwinklung 8, 10 des Halterungsprofils 6. Um zu vermeiden, daß bei einer Durchbiegung der Verbundglasscheibe 150 der untere Glasscheibenrand 4 durch die Einspannung im Halterungsprofil 6 und aufgrund der Elastizität des zwischen den Einzelscheiben angeordneten Materials zusammengepreßt wird, sind im Bereich zwischen der äußeren und inneren Abwinklung 8, 10 Mittel vorgesehen, die ein solches Zusammenpressen verhindern. In Fig. 10 sind die Mittel dabei als druckfeste Einlagen 154, die auch als steife Zwischenlagen bezeichnet werden können, dargestellt. Eine ausreichende Steifigkeit ist beispielsweise dann vorhanden, wenn die Einlagen 154 aus Metall oder entsprechend hartem Kunststoff bestehen. Ersichtlicherweise entspricht die Querschnittsbreite der druckfesten Einlagen 154 der Querschnittsbreite des jeweilig zwischen den Einzelscheiben angeordneten Materials. Die druckfesten Einlagen 154 verhindern somit ein Zusammenpressen des unteren Glasscheibenrandes 4, so daß das Halterungsprofil 6 auch bei dieser Art von Verbundglasscheiben 150 verwendet werden kann. Würden die Mittel zum Verhindern des Zusammenpressens des unteren Glasscheibenrandes 4 nicht angeordnet sein, würde die Verbundglasscheibe 150 beim Durchbiegen aus dem Halterungsprofil 6 herausrutschen können.

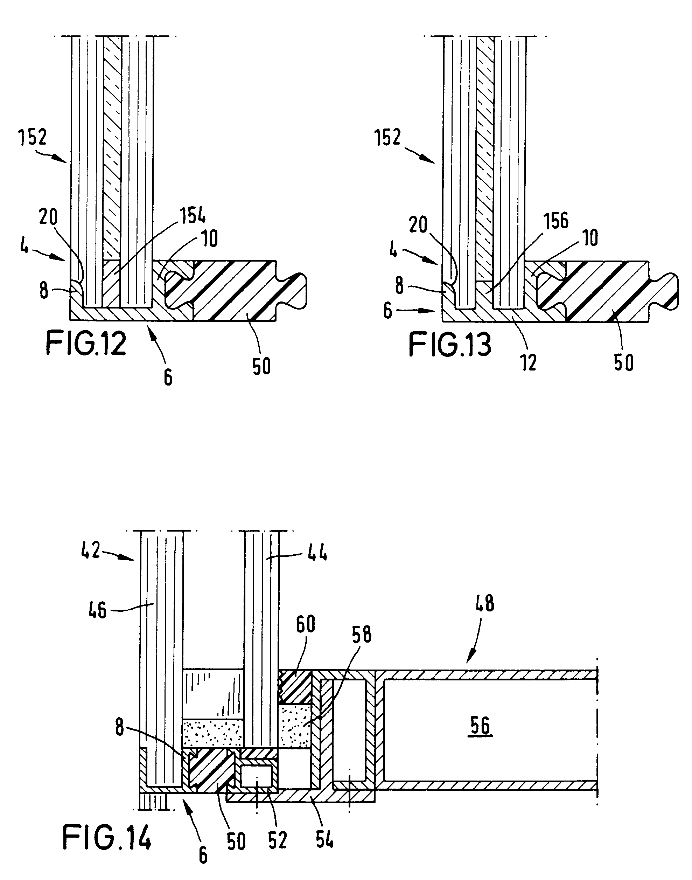

Die Fig. 11 entspricht im wesentlichen der Fig. 10, wobei lediglich die Mittel zum Verhindern des Zusammenpressens des unteren Glasscheibenrandes 4 der Verbundglasscheibe 150 als eine andere Variante dargestellt sind. Anstelle der druckfesten Einlagen 154 aus Fig. 10 weist in Fig. 11 das Halterungsprofil 6 im Bereich des zwischen der äußeren und inneren Abwinklung 8, 10 angeordneten Verbindungssteges 12 angeordnete freie Zapfen 156 auf. Die freien Zapfen sind dabei fest bzw. einstückig mit dem Halterungsprofil 6 verbunden. Auch gilt im Bezug auf die Querschnittsbreite der freien Zapfen 156 das zu den druckfesten Einlagen 154 in Fig. 10 Gesagte.

Die Fig. 12 und 13 zeigen eine aus zwei Einzelscheiben bestehende Glasscheibe 152, bei welcher zwischen den Glasscheiben photovoltaische Elemente angeordnet sind. Die photovoltaischen Elemente sind bevorzugt in eine Folienzwischenlage eingelegt und können somit auf einfache Art und Weise zwischen den Einzelscheiben einer solchen Glasscheibe 152 angeordnet werden. Wie auch bei der Verbundglasscheibe 150 aus den Fig. 10 bzw. 11 besteht bei einer solchen Zwischenschicht aus photovoltaischen Elementen das Problem des Zusammenpressens des unteren Glasscheibenrandes 4, wenn eine solche Glasscheibe 152 durch ein Halterungsprofil 6 in ihrem Randbereich gehalten ist. Um dieses Zusammenpressen im unteren Glasscheibenrand 4 der Glasscheibe 152 zu vermeiden, sind in Fig. 12 eine druckfeste Einlage 154 und in Fig. 13 ein freier Zapfen 156, der einstückig mit dem Halterungsprofil (6) ausgebildet ist, vorgesehen. Im Hinblick auf die Querschnittsbreite und das Material der Einlage 154 bzw. des freien Zapfens 156 wird auf die Erläuterungen zu den Fig. 10 und 11 verwiesen. Im Hinblick auf die Querschnittshöhe der druckfesten Einlage 154 bzw. des freien Zapfens 156 aus den Fig. 10 bis 13 ist es zweckmäßig, wenn diese der Querschnittshöhe der äußeren Abwinklung 8 entspricht. Unter bestimmten Gegebenheiten kann es dann auch von Vorteil sein, wenn diese Querschnittshöhe der Querschnittshöhe der inneren Abwinklung 10 entspricht. Bei den Fig. 12 und 13 sind an das Halterungsprofil 6 anschließend jeweils Kunststoffteile 50 gezeigt, die anschließend zu Fig. 14 näher erläutert werden.

Sämtliche bereits geschilderten Ausgestaltungsmöglichkeiten des Halterungsprofils 6 finden auch bei den in den Fig. 10 bis 13 gezeigten Verbundglasscheiben bzw. Glasscheiben 150, 152 Anwendung. Insbesondere bei den mit den photovoltaischen Elementen versehen Glasscheiben 152 ist das Eingreifen der äußeren Abwinklung 8 des Halterungsprofils 6 in die Stufe 20 des Glasscheibenrandes 4. Durch diese Ausgestaltung kann ein sich bei ungünstigem Sonnenstand ergebender Schlagschatten auf die photovoltaischen Elemente, verursacht durch die äußere Abwinklung 8, in Grenzen gehalten werden. Die photovoltaischen Elemente werden demnach gar nicht oder nur gering vom Schlagschatten der äußeren Abwinklung 8 abgedeckt. Die einzelnen photovoltaischen Elemente, die durch einen solchen Schlagschatten außer Funktion gesetzt werden, können nämlich nicht nur keine Energie produzieren, sondern stellen sich als Sperrdioden dar, womit aufgrund eines Schlagschattens auf einzelne photovoltaische Elemente ein ganzes Scheibenelement mit einer Vielzahl von photovoltaischen Elementen außer Funktion gesetzt werden kann.

Die in den folgenden Figuren dargestellte Doppelverglasung 42 zeigt stets den gleichen Aufbau und ist stufig ausgebildet, d.h. die auf der Rauminnenseite angeordnete, innenliegende Glasscheibe 44 ist zumindest am oberen und unteren Rand durchgehend kleiner als die auf der Wetterseite angeordnete, außenliegende Glasscheibe 46, woraus sich die stufige Ausbildung ergibt. Zwischen den beiden Glasscheiben 44, 46 sind die Glasabstands- und dichtelemente angeordnet. Den prinzipiell gleichen Aufbau weist auch das gezeigte Paneel 146 auf, bei welchem gleichfalls ein stufiger Aufbau gegeben ist, da die auf der Wetterseite als Deckscheibe angeordnete Glasscheibe 148 an dem gezeigten Rand weiter nach unten geführt ist, als der sich anschließende raumseitige Paneelbereich. Allen im folgenden gezeigten Anordnungen ist es ebenfalls gemeinsam, daß das Halterungsprofil 6 und die außenliegende Glasscheibe 46 bzw. 148 - wie beschrieben - in einer Ebene liegen. Den Wärmeübergang zwischen dem Halterungsprofil 6 und der Fassadenunterkonstruktion 48 verhindern sogenannte wärmeisolierende Elemente, die bei gleicher Ausgestaltungsform nachfolgend mit identischen Ziffern versehen werden.

In Fig. 14 dient als isolierendes Element ein im Querschnitt annähernd würfelförmiges Kunststoffteil 50, welches in schwalbenschwanzförmige Vertiefungen der inneren Abwinklung 8 und eines Profilteils 52 der Fassadenunterkonstruktion 48 eingebracht ist und somit ein Verbindungselement zwischen dem Halterungsprofil 6 und der Fassadenunterkonstruktion 48 darstellt. Zur zusätzlichen Eigengewichtsaufnahme und zum Brandschutz dient ein unterhalb des Profilteils 52 angeordnetes weiteres Profilteil 54, welches mit einem Riegel 56 der Fassadenunterkonstruktion 48 und dem Profilteil 52 - wie gestrichelt angedeutet - verschraubt ist. Die tragende Verbindung zwischen der Doppelverglasung 42 und der Fassadenunterkonstruktion 48 besteht aus einer Verklebung 58 zwischen der innenliegenden Glasscheibe 44 und der Fassadenunterkonstruktion 48, die an ihrer Oberseite zusätzlich ein Dichtungsteil 60 aufweist. Der Glasscheibenrand der innenliegenden Scheibe 44 ist auf dem Profilteil 52 gelagert, wobei dazwischen ein elastisches Dichtmaterial eingebracht ist. Die innenliegende Scheibe 44 ist durch diese Ausgestaltung somit elastisch gebettet bzw. gelagert.

Bei Winddruck oder -sog wird sich die Doppelverglasung 42 zur Raumseite oder zur Wetterseite hin verbiegen bzw. durchbiegen. Damit diese Durchbiegung im Bereich des Glasscheibenrandes der Doppelverglasung 42 nicht zu einem Bruch führt, muß dort eine Drehbewegung ermöglicht werden. Bei der innenliegenden Glasscheibe 44 ist die Drehbewegung durch die elastische Bettung gewährleistet. Die außenliegende Glasscheibe 46 ist mit ihrem Glasscheibenrand jedoch von dem Halterungsprofil 6 fest anliegend umfaßt. Damit es nicht zum Glasbruch kommt, muß das Halterungsprofil 6 zusammen mit der außenliegenden Scheibe 46 verdrehbar sein. Es muß also eine vorbestimmte Drehbewegung um eine, zum Glasscheibenrand parallele, außerhalb diesem und außerhalb des Halterungsprofil 6 liegende Drehachse, ermöglicht werden. Diese Drehachse bildet sich in dem Kunststoffteil 50 auf Grund dessen Elastizität bzw. dessen Materialeigenschaften. Das Kunststoffteil 50 kann sich bei einer Durchbiegung der außenliegenden Glasscheibe 46 und somit einer Verdrehung des Halterungsprofils 6 verformen, so daß das Halterungsprofil 6 sich zur Raumseite und zur Wetterseite hin verdrehen kann. Statisch gesehen bildet sich in dem Kunststoffteil 50 eine Art Gelenk aus, wodurch nur ein geringer Betrag von Momenten in den Bereich des Halterungsprofils 6 und somit in den Bereich des Glasscheibenrandes der außenliegenden Glasscheibe 46 übertragen werden können. Vorteilhafterweise ist das Kunststoffprofil 50 so nah wie möglich an dem Halterungsprofil 6 angeordnet, so daß sich ein möglichst kurzer Hebelarm zum Halterungsprofil 6 ergibt. Die erforderliche vorbestimmte Drehbewegung des Halterungsprofils 6, die erforderlich ist, um einen Glasbruch sicher zu vermeiden, kann entsprechend der verwendeten Materialien und Abmessungen der in diesem Bereich zusammenwirkenden Teile berechnet werden.

Das weitere Profilteil 54 wird lediglich abschnittsweise über den gesamten Rand der Doppelverglasung 42 angeordnet sein, so daß sich nötigenfalls auch das Profilteil 52 zur Unterstützung der erforderlichen Drehbewegung etwas verdrehen kann, insbesondere dann, wenn die Verschraubung zwischen dem Profilteil 52 und dem weiteren Profilteil 54 Spiel aufweist.

Bei einer konstruktiven Variante zu Fig. 14 kann die Sicherung der Doppelverglasung 42 im Bereich der Verklebung 58 über eine Schraube erfolgen, die mit Spiel angeordnet ist, so daß auch bei dieser Variante sich nötigenfalls eine Verdrehung des Profilteils 52 einstellen kann. Die innenliegende Glasscheibe 44 ist dann wieder elastisch gebettet und die Verdrehung der außenliegenden Scheibe 46 sowie des Halterungsprofiles 6 wird im Bereich des Kunststoffteils 50 zugelassen. Eine zusätzliche Eigengewichtsablagerung und eine Sicherung für den Brandfall kann alternativ dadurch erreicht werden, daß das Kunststoffteil 50 stückweise metallische Einsätze aufweist. Solche metallischen Einsätze verhindern jedoch nicht die Verdrehung des Halterungsprofils 6 zusammen mit dem unteren Rand der außenliegenden Glasscheibe 46 in der Weise, daß es im Bereich des Glasscheibenrandes zu einem Bruch kommen könnte.

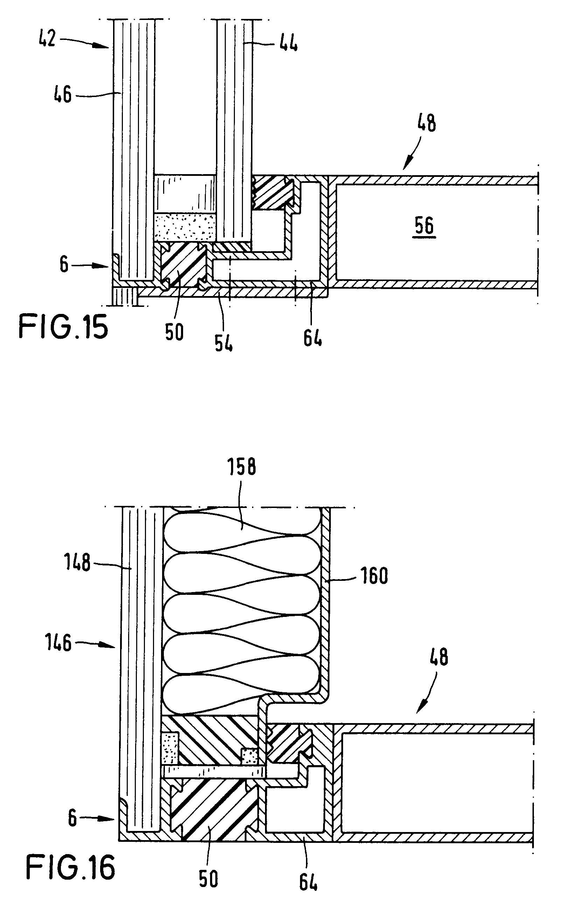

Fig. 15 zeigt die Anordnung der Doppelverglasung 42 an der Fassadenunterkonstruktion 48 über ein Hilfsprofil 64, welches über geeignete Mittel an den Riegel 56 der Fassadenunterkonstruktion 48 angeschlossen ist. Die erfindungsgemäße Anordnung des Halterungsprofiles 6 kann demnach auch für Doppelverglasungen 42 verwendet werden, die ohne tragende Verklebung an der Fassadenunterkonstruktion 48 befestigt sind. Auch bei diesem Ausführungsbeispiel ist die innenliegende Glasscheibe 44 elastisch gebettet, wodurch sich die erforderliche Verdrehung einstellen kann. Die Verdrehung der außenliegenden Glasscheibe 46 zusammen mit dem Halterungsprofil 6 erfolgt wie in Fig. 14 erläutert im Bereich des Kunststoffteiles 50. Ebenfalls dargestellt ist das weitere Profilteil 54 zur zusätzlichen Eigengewichtsaufnahme der Doppelverglasung 42 und zum Brandschutz, durch dessen Anordnung aber die erforderlichen Verdrehungen nicht behindert werden.

Eine Variante zu Fig. 15 kann in der Verwendung eines anders ausgebildeten Hilfsprofils 64 bestehen. Die Verdrehungsmöglichkeiten der Doppelverglasung 42 im Bereich der Glasscheibenränder der innenliegenden Glasscheibe 44 und der außenliegende Glasscheibe 46 werden dadurch nicht geändert. Die Erläuterung der verschiedenen konstruktiven Varianten soll unter anderem darlegen, daß hinsichtlich der Anschlußmöglichkeiten der Doppelverglasung 42 an die Fassadenunterkonstruktion 48 keine Grenzen gesetzt sind, solange sich durch eine elastische Bettung der innenliegenden Glasscheibe 44 und eine Verdrehungsmöglichkeit der außenliegenden Glasscheibe 46 zusammen mit dem Halterungsprofil 6 eine Verdrehung, beispielsweise im Bereich des Kunststoffteiles 50 ergeben kann. Es spielt auch keine Rolle, ob das sich auf der Seite der Fassadenunterkonstruktion 48 an das Kunststoffteil 50 anschließende Hilfsprofil 64 starr oder leicht beweglich an dem Riegel 56 der Fassadenunterkonstruktion angeordnet ist, solange sich nur durch die Materialeigenschaften des Kunststoffteils 50 die erforderliche Verdrehung einstellen kann. An dieser Stelle soll auch bemerkt werden, daß, falls die vorgeschlagene Anordnung des Halterungsprofils 6 an den Seitenrändern einer Doppelverglasung 42 angeordnet ist, sich der Riegel 56 auch durch einen Pfosten der Fassadenunterkonstruktion 48 ersetzen läßt. Verschiedene Brandschutzsicherungen wurden zu den vorangegangenen Figuren beschrieben und sind in den nachfolgenden Figuren teilweise nicht mehr gezeigt. Wesentlich ist jedoch, daß die Brandschutzsicherungen die erforderliche Verdrehung nicht behindern.

Fig. 16 zeigt die Verwendung des Halterungsprofils bei einem Paneel 146. Das Paneel weist auf der Wetterseite eine als Deckscheibe dienende Glasscheibe 148 auf. Solche Paneele 146 werden beispielsweise dann angewandt, wenn Außenfassaden aus ästhetischen Gesichtspunkten verglast werden sollen, ein Durchblick bzw. Ausblick von der Raumseite her aber nicht gewünscht oder nicht erforderlich ist. Im Prinzip entspricht der Aufbau aus Fig. 16 dem in Fig. 15, wobei lediglich anstelle der innenliegenden Glasscheibe 44 aus Fig. 15 ein sich an die Glasscheibe 148 raumseitig anschließender Paneelbereich vorgesehen ist. In der gezeigten Darstellung besteht der Paneelbereich aus einem Dämmstoff 158 und einer sich daran anschließenden Abdeckung 160. Die Glasscheibe 148 ist in entsprechender Weise am unteren Rand durch das Halterungsprofil 6 gehalten, an welches sich das Kunststoffteil 50 und anschließend das Hilfsprofil 64 - wie auch in Fig. 15 gezeigt - anschließen. Die Verdrehung der Glasscheibe 148 zusammen mit dem Halterungsprofil 6 erfolgt somit wie in Fig. 14 erläutert im Bereich des Kunststoffteiles 50. Wesentlich ist es dabei, daß analog zu der innenliegenden Glasscheibe 44 aus Fig. 15 der sich an die Glasscheibe 148 anschließende Paneelbereich ebenfalls elastisch gebettet ist und die erforderliche Verdrehung der Glasscheibe 148 somit nicht verhindert. Die Verdrehung, die ja zusammen mit einem Durchbiegen der Glasscheibe 148 erfolgt, wird auch deshalb nicht verhindert, da der sich zwischen der Glasscheibe 148 und der Abdeckung 160 befindliche Dämmstoff 158 elastisch ist, d.h. eine Durchbiegung der Glasscheibe 148 zuläßt.

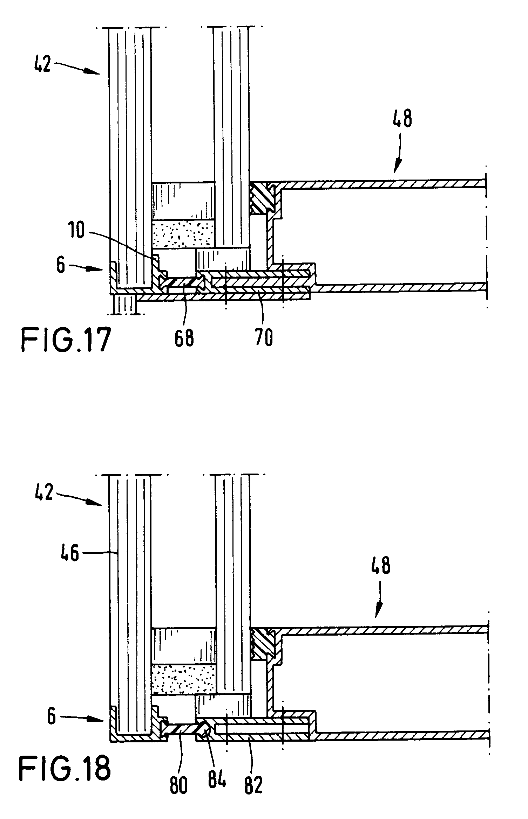

In Fig. 17 ist wiederum eine Doppelverglasung 42 gezeigt, die ohne Verklebung an die Fassadenunterkonstruktion 48 angeschlossen ist. Unterschiede zeigen sich bei dieser Figur in Form der Ausgestaltung des isolierenden Elementes, welches sich als längliches Kunststoffteil 68 darstellt, das in üblicher Weise in die schwalbenschwanzförmigen Ausnehmungen der inneren Abwinklung 10 des Halterungsprofils 6 und eines Hilfsprofils 70 eingreift. Bei dem Kunststoffteil 68 ist die parallel zur Glasscheibenebene der Doppelverglasung 42 verlaufende Querschnittshöhe geringer als dessen Querschnittsbreite. Dadurch ergibt sich eine geringere Steifigkeit des Kunststoffteils 68 um die sich in dessen Bereich einstellende, parallel zum Glasscheibenrand der Doppelverglasung 42 einstellende Drehachse. Das Kunststoffteil 68 stellt noch immer eine ausreichende Verbindung zwischen der Doppelverglasung 42 und der Fassadenunterkonstruktion 48 dar, wobei aber dessen Verbiegungs- bzw. Verdrehungseigenschaften verbessert werden.

Alternativ kann ein Kunststoffteil mit rechteckigem Querschnitt am unteren Rand der Doppelverglasung 42 als Verbindungsteil zwischen dem Halterungsprofil 6 und der Fassadenunterkonstruktion 48 dienen. Ein solches Kunststoffteil greift dann in entsprechende rechteckförmige Ausnehmungen des Halterungsprofils 6 und der Fassadenunterkonstruktion 48 ein und ist dort durch Verschraubung gesichert. Auch hier ist die parallel zur Glasscheibenebene der Doppelverglasung 42 verlaufende Querschnittshöhe des Kunststoffteils geringer als dessen Querschnittsbreite, wodurch die Verdrehung bzw. Durchbiegung des Kunststoffteils erleichtert wird. Eine andere Ausbildungsform eines Kunststoffteiles kann darin bestehen, daß dessen Querschnittsmittelbereich geschwächt ist, d.h. daß die parallel zur Glasscheibenebene der Doppelverglasung 42 verlaufende Querschnittshöhe eine Verjüngung aufweist. Durch eine solche Verjüngung wird die Steifigkeit des Kunststoffteiles zu der sich in dessen Bereich einstellenden Drehachse noch weiter verringert. Es kann aus statischen Gesichtspunkten erforderlich sein, daß ein derart verjüngtes Kunststoffteil nicht am unteren Rand der Doppelverglasung 42, sondern nur an dessen oberen Rand bzw. an dessen Seitenrändern angeordnet werden kann.

In diesem Zusammenhang soll noch erwähnt werden, daß die innenliegende Glasscheibe 44 der Doppelverglasung 42 auch auf einer Klotzung aufgeständert sein kann, ohne daß dadurch die Verdrehungsmöglichkeit des unteren Randes der innenliegenden Glasscheibe 44 behindert wird. Bei einer Durchbiegung der innenliegenden Glasscheibe 44 wird sich der untere Glasscheibenrand mit seinen bevorzugt abgerundeten Kanten auf der Klotzung abstützen und sich um diese Kante verdrehen. Ein Brechen des unteren Glasscheibenrandes der innenliegenden Glasscheibe 44 wird noch immer verhindert, da sich in diesem Bereich der Aufbau von Eckkantenbelastungen aufgrund eines elastischen Nachgebens der Klotzung selber und/oder aufgrund eines Nachgebens der Klotzung bzw. der Halterungsteile unter der Aufklotzung (fiktive Drehachse) ausreichend verhindert wird.

Fig. 18 zeigt eine weitere Variante eines Kunststoffteiles 80, welches an dem Halterungsprofil 6 über eine schwalbenschwanzförmige Ausnehmung angeschlossen ist und in ein Hilfsprofil 82 über ein abgerundetes Teil 84 in eine entsprechend geformte Ausnehmung des Hilfprofils 82 eingreift. Es entsteht somit eine Art Gelenkverbindung, wobei das abgerundete Teil 84 in die Ausnehmung des Hilfsprofils 82 einschnappt, d.h. von der Ausnehmung zum großen Teil umfaßt wird, so daß das Kunststoffteil 80 über das abgerundete Teil 84 der Ausnehmung des Hilfsprofils 82 festklemmt wird, jedoch darin verdreht werden kann. Die erforderliche Drehbewegung des unteren Glasscheibenrandes der außenliegenden Glasscheibe 46 zusammen mit dem Halterungsprofil 6 wird durch diese gelenkartige Anbindung des Kunststoffteils 80 an der Fassadenunterkonstruktion 48 zusätzlich gefördert. Die Drehbewegung wird also nicht nur alleine aufgrund der Materialeigenschaften des Kunststoffteiles 80 bedingt. Vorteilhafterweise kann das abgerundete Teil 84 auch auf der Seite des Halterungsprofils 6 angeordnet sein, um somit den Hebelarm zum unteren Glasscheibenrand der außenliegenden Glasscheibe 46 zu verkürzen. Es ist auch denkbar, daß das Kunststoffprofil 80 beidseits mit einem abgerundeten Teil 84 an das Halterungsprofil 6 bzw. das Hilfsprofil 82 angeschlossen ist.

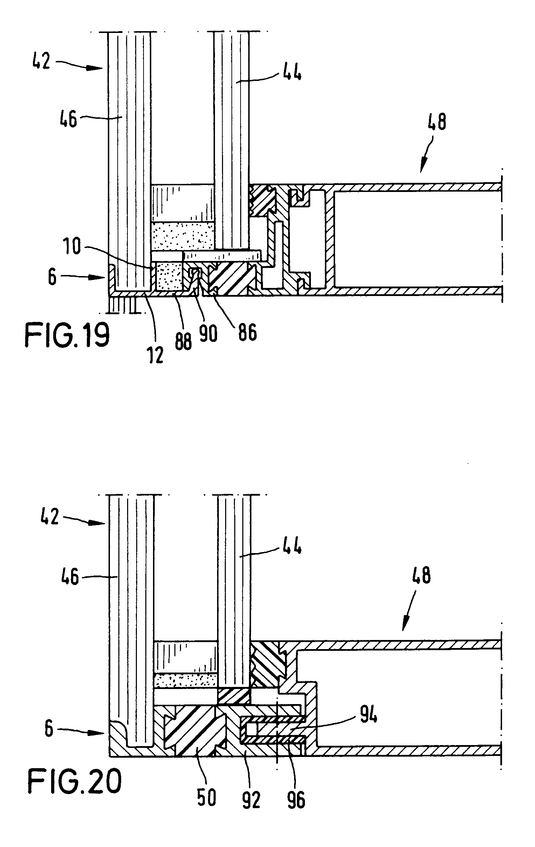

Fig. 19 zeigt den Anschluß des Halterungsprofils 6 an ein Profilteil 86 der Fassadenunterkonstruktion 48 über eine besondere Verbindungsstelle. An die innere Abwinklung 10 schließt sich als Fortsetzung des Verbindungsstegs 12 ein Verbindungsteil 88 an, welches in ein sich vom Glasscheibenrand wegerstreckendes, zur Glasscheibenmittellinie gerichtetes und parallel zur Verglasung verlaufendes Ansatzstück 90 übergeht. Das Ansatzstück 90 ist in einer Ausnehmung des Profilteils 86 mit Spiel gehalten und weist an seinem freien Ende eine Verdickung auf. Die vorbestimmte Drehbewegung des Halterungsprofils 6 wird einerseits durch das Spiel zwischen dem Ansatzstück 90 und der Ausnehmung des Profilteils 86 und andererseits durch die Elastizität des Ansatzstückes 90 sowie des Verbindungsteils 88 ermöglicht. Bei einer Verdrehung der Doppelverglasung 42 und somit der außenliegenden Glasscheibe 46 kann das Halterungsprofils 6 aufgrund des vorgenannten Spiels und/oder der Elastizität der vorgenannten Teile eine Verdrehbewegung ausführen, so daß ein Bruch im unteren Glasscheibenrand der außenliegenden Glasscheibe 46 vermieden wird. Die innenliegende Glasscheibe 44 ist wieder schwimmend bzw. elastisch gelagert, um auch hier ein Brechen im Bereich des unteren Glasscheibenrandes zu vermeiden.

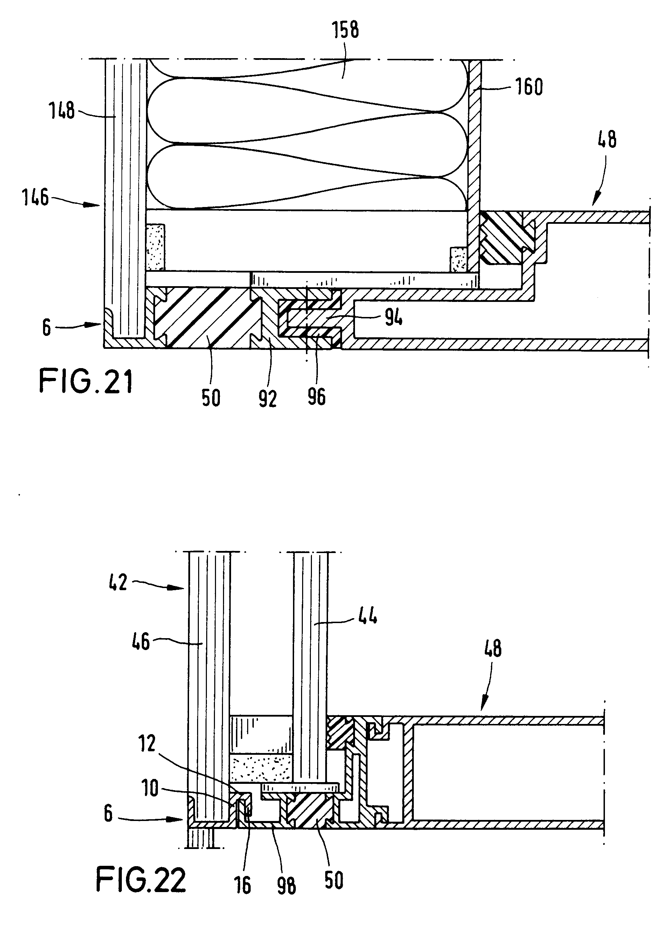

Die Fig. 20 und 21 zeigen eine weitere Variante der Anordnung des Halterungsprofils 6 an der Fassadenunterkonstruktion 48. Die vorbestimmte Drehbewegung des Halterungsprofils 6 unterstützend ist neben dem u.a. in Fig. 10 beschriebenen Kunststoffteil 50 eine besondere Verbindungststelle angeordnet. Diese Verbindungsstelle besteht aus einem sich an das Kunststoffteil 50 anschließenden Profilteil 92, welches in Richtung auf die Fassadenunterkonstruktion 48 eine Ausnehmung darstellt, in die ein sich von der Fassadenunterkonstruktion 48 wegerstreckender Steg 94 eingreift. Zwischen dem Steg 94 und der Ausnehmung des Profilteils 92 ist ein elastisches Material 96 in ausreichender Stärke angeordnet. Eine Sicherung zwischen dem Profilteil 92 und dem Steg 94 erfolgt über eine Schraubverbindung, wobei die Schraube mit Spiel an der Verbindungsstelle angeordnet ist. Die vorbestimmte Drehbewegung des Halterungsprofils 6 zusammen mit der außenliegenden Glasscheibe 46 der Doppelverglasung 42 bzw. zusammen mit der außenliegenden Glasscheibe 148 wird bei der gezeigten Konstruktion dadurch zusätzlich ermöglicht, daß sich das Profilteil 92 aufgrund der Anordnung des elastischen Materials 96 und/oder der Elastizität des Stegs 94 ebenfalls bewegen bzw. drehen kann. Um die Drehbewegung des Profilteils 92 nicht zu behindern, weist die Schraubverbindung das vorgenannte Spiel auf. Damit das Profilteil 92 durch die Anordnung der innenliegenden Glasscheibe 44 bzw. es sich an die Glasscheibe 148 raumseitig anschließenden Bereichs des Paneels 146 nicht behindert wird, ist zwischen dem unteren Glasscheibenrand der innenliegenden Glasscheibe 44 bzw. dem entsprechenden Bereich des Paneels 146 und dem Profil 92 ein elastisches Material, beispielsweise ein Doppelklebeband vorgesehen, welches sich entsprechend der Drehbewegung des Profilteils 92 zusammendrücken bzw. dehnen läßt.

Bei entsprechender Materialwahl ist es auch möglich, auf das Kunststoffteil 50 völlig zu verzichten, wodurch die vorbestimmte Drehbewegung lediglich im Bereich des Profilteils 92 bzw. des Stegs 94 stattfindet, wobei diese Verbindungsstelle eine Art Längsschiebegelenk darstellt. Den isolierenden Übergang könnte dann das elastische Material 96 verhindern.

Fig. 22 zeigt die Verwendung des Halterungsprofils 6 wie es in Fig. 1 gezeigt ist. Das sich von der Glasscheibenmittellinie in Richtung des Glasscheibenrandes der Doppelverglasung 42 wegerstreckende und parallel zur Verglasung verlaufende Ansatzstück 16 greift dabei in eine Ausnehmung eines Profilteils 98 ein. Wichtig ist es dabei, daß zwischen der inneren Abwinklung 10 und dem Profilteil 98 eine Beabstandung vorhanden ist, so daß sich das Halterungsprofil 6 auch dann verdrehen kann, wenn die außenliegende Glasscheibe 46 sich aufgrund von Windsog nach außen durchbiegt. Es darf also keine Zwängung zwischen dem Halterungsprofil 6 und dem sich anschließenden Profilteil 98 entstehen. Die vorbestimmte Drehbewegung bei dieser in Fig. 22 gezeigten Verbindungsstelle erfolgt aufgrund der Elastizität des Ansatzstückes 16 einerseits und des Verbindungssteges 12 andererseits, der das Ansatzstück 16 mit der inneren Abwinklung 10 verbindet. Das Kunststoffteil 50 kann dabei zusätzlich die vorbestimmte Drehbewegung unterstützen, wobei in diesem Fall vorteilhafter Weise der untere Glasscheibenrand der innenliegenden Glasscheibe 44 über ein elastisches Material bzw. eine elastische Aufklotzung auf dem Kunststoffteil 50 aufgeständert ist.

Alternativ kann das in Fig. 22 dargestellte Halterungsprofil eine spezielle Ausbildung aufweisen. An das Halterungsprofil 6 kann sich ein bogenförmiges Ansatzstück an die innere Abwinklung 10 anschließen, welches in eine ebenfalls bogenförmig ausgebildete Ausnehmung eines Profilteils eingreift. Entscheidend ist es dabei, daß einerseits das freie Ende des bogenförmigen Ansatzstücks vom Ende der Ausnehmung des Profilteils beabstandet ist und andererseits zwischen der inneren Abwinklung 10 und dem Profilteil ebenfalls eine Beabstandung vorhanden ist, damit sich die vorbestimmte Drehbewegung des Halterungsprofils 6 einstellen kann. Dem bogenförmigen Ansatzstück muß es ermöglicht werden, in der Ausnehmung des Profilteils eine Drehbewegung auszuführen, die durch Zwängungen nicht behindert werden darf. Die vorbestimmte Drehbewegung des Halterungsprofils 6 wird zusätzlich durch die Elastizität des bogenförmigen Ansatzstückes erleichtert. Auch kann das Kunststoffteil 50 die vorbestimmte Drehbewegung zusätzlich fördern, wenn, wie zu Fig. 22 erläutert, die Verbindung zwischen dem unteren Glasscheibenrand der innenliegenden Glasscheibe 44 der Doppelverglasung 42 elastisch ausgebildet ist.

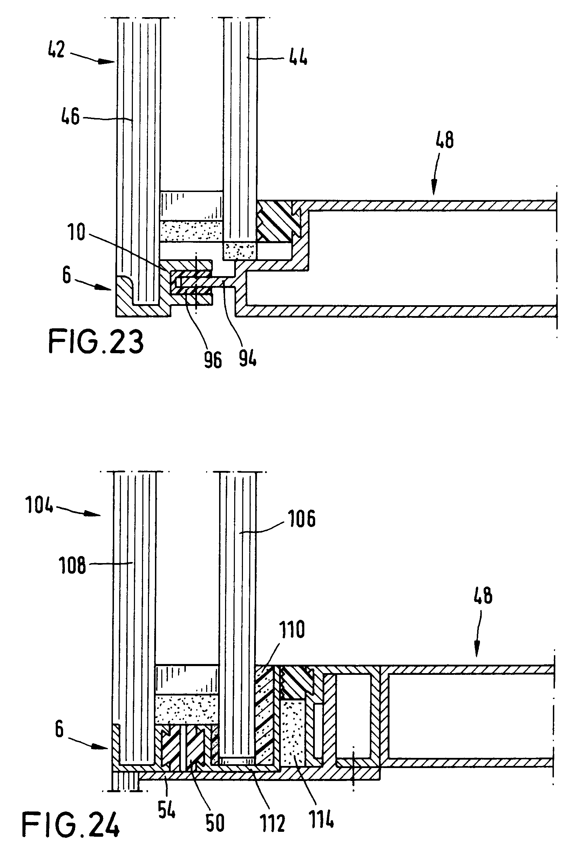

Die bereits zu den Fig. 20 und 21 erwähnte Variante einer in Art einer Steckverbindung ausgebildeten Verbindungsstelle zwischen dem Halterungsprofil 6 und der Fassadenunterkonstruktion 48 ohne die Verwendung eines Kunststoffteils als isolierendes Element ist in Fig. 23 gezeigt. An die innere Abwinklung 10 schließt sich eine doppelstegartige Ausnehmung an, in welche der Steg 94 als Teil der Fassadenunterkonstruktion 48 eingreift. Zwischen dem Steg 94 und der Ausnehmung ist das elastische Material 96 angeordnet. Das elastische Material 96 dient dabei einerseits als den Wärmeübergang verhinderndes isolierendes Element und andererseits dazu, daß das Halterungsprofil 6 die vorbestimmte Drehbewegung ausführen kann. Gefördert wird diese vorbestimmte Drehbewegung durch die Elastizität des Stegs 94, der sich entsprechend der Drehbewegung des Halterungsprofils 6 nach oben bzw. unten verbiegt. Die Sicherung zwischen der Ausnehmung und dem Steg 94 erfolgt über eine Schraubverbindung, die Spiel aufweist, um die vorbestimmte Drehbewegung nicht durch Zwängungen zu behindern. Bei dieser Variante kann die innenliegende Glasscheibe 44 auf einem eher unelastischen Material auf der Fassadenunterkonstruktion 48 aufgeständert sein, da die Verbiegung des Steges 94 durch seine kragartige, zu den übrigen Teilen beabstandete Ausbildung nicht behindert wird. Die Materialeigenschaften und Materialstärken im Bereich der Verbindungsstelle sind dabei abhängig von der maximal erforderlichen vorbestimmten Drehbewegung des Halterungsprofils 6 bzw. des unteren Glasscheibenrandes der außenliegenden Glasscheibe 46 der Doppelverglasung 42.

Fig. 24 zeigt, daß die erfindungsgemäße Anordnung des Halterunsgsprofils 6 auch bei einer Doppelverglasung 104 Verwendung finden kann, bei welcher die innenliegende Glasscheibe 106 und die außenliegende Glasscheibe 108 gleiche Abmessungen aufweisen, also eine Doppelverglasung 104 ohne stufige Ausbildung vorliegt. Wichtig ist es dabei, daß die innenliegende Glasscheibe 106 schwimmend bzw. elastisch gelagert ist, um dadurch die vorbestimmte Drehbewegung des Halterunsprofils 6 bzw. des unteren Glasscheibenrandes der außenliegenden Glasscheibe 108 nicht zu behindern. Die Verdrehung des Halterungsprofils 6 wird durch das Kunststoffteil 50 ermöglicht, wie es unter anderem zu Fig. 14 erläutert worden ist. Die elastische Bettung der innenliegenden Glasscheibe 106 erfolgt über ein elastisches Material 110, welches zwischen dem unteren Glasscheibenrand der innenliegenden Glasscheibe 106 und dem diesen umgreifenden Profilteil 112 in ausreichender Stärke angeordnet ist. Das Profilteil 112 ist bei der gezeigten Ausführungsform über eine Verklebung 114 an der Fassadenunterkonstruktion 48 befestigt. Da das für die Verklebung 114 verwendete Material ebenfalls elastisch ist, kann sich die parallel zum Glasscheibenrand ausbildende Drehachse für die vorbestimmte Drehbewegung des Halterungsprofils 6 auch im Bereich der Verklebung ausbilden. Es hängt dabei von den Materialeigenschaften des Kunststoffteils 50 ab, ob sich die Drehachse für die vorbestimmte Drehbewegung zu einem größeren oder kleinerem Anteil auch im Bereich der Verklebung 114 ausbildet. Das hauptsächlich für den Brandfall als Sicherung abschnittsweise im Randbereich der Doppelverglasung 104 angeordnete weitere Profilteil 54 verhindert die vorbestimmte Drehbewegung nicht, da es einerseits nur abschnittsweise angeordnet ist und andererseits seine Verschraubung Spiel aufweisen kann.

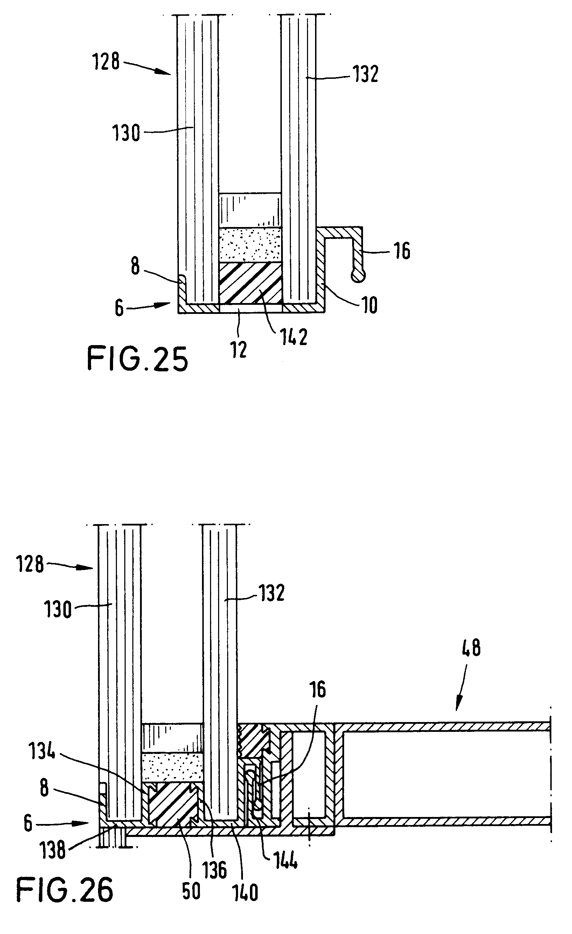

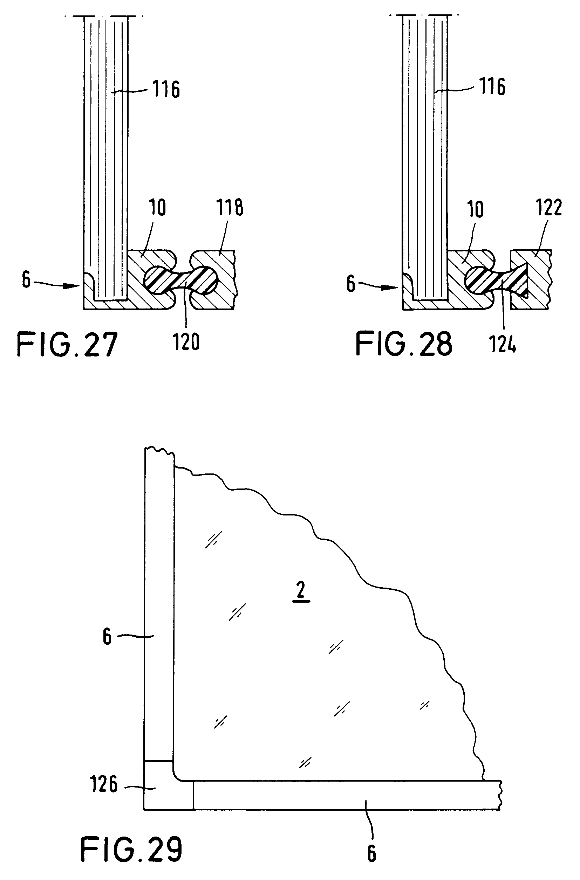

Die Figuren 25 und 26 zeigen, daß die erfindungsgemäße Anordnung des Halterungsprofils 6 auch bei einer Doppelglasscheibe 128 Verwendung finden kann, bei welcher die außenliegende Glasscheibe 130 und die innenliegende Glasscheibe 132 gleiche Abmessungen aufweisen, d.h. kein Stufenglas, sondern ein normales Isolierglas vorliegt. Die gezeigten Doppelglasscheiben 128 sind auf der Wetterseite der außenliegenden Glasscheibe und auf der Raumseite der innenliegenden Glasscheibe von dem Halterungsprofil 6 fest umfaßt. Wie beschrieben weisen die Halterungsprofile 6 auf der entsprechenden Wetterseite und der entsprechenden Raumseite die äußeren und inneren Abwinklungen 8, 10 auf.

In Fig. 25 ist zwischen den äußeren und inneren Glasscheiben 130, 132 ein Zwischenteil 142 oberhalb des Verbindungsstegs 12 und an diesem anliegend angeordnet. Das Zwischenteil 142 kann beispielsweise ein Kunststoffteil sein, wobei dieses Teil entsprechend hart sein muß, um das feste Umfassen der Doppelscheibe 128 durch das Halterungsprofil 6 zu gewährleisten. Die erforderliche vorbestimmte Drehbewegung des Halterungsprofiles 6 erfolgt um eine Drehachse, die sich an der Verbindungsstelle des Ansatzstückes 16 an ein Profilteil der Fassadenunterkonstruktion einstellen wird. Eine solche Verbindungsstelle wurde bereits anhand vorstehender Figuren beschrieben, wobei das Ansatzstück 16 auch einen bogenförmigen Querschnitt aufweisen kann. Wie ebenfalls beschrieben, wird die Verdrehung an der Verbindungsstelle durch die Elastizität der Verbindungsteile einerseits und/oder das Vorhandensein von Spiel zwischen den Verbindungsteilen bedingt. Wichtig ist es bei dieser Anordnung des Halterungsprofiles an der Doppelglasscheiben 128, daß wenigstens eines der im Zwischenraum der Doppelglasscheibe 128 befindlichen Dicht- bzw. Abstandsmittel eine solche Materialeigenschaft aufweist, daß eine Relativbewegung der außenliegenden und innenliegenden Glasscheibe 130, 132 sicher verhindert wird, so daß die feste Umfassung des Halterungsprofils 6 um den unteren Rand der Doppelscheibe 128 jederzeit gewährleistet ist. Insbesondere um einen Wärmeübergang zwischen Wetterseite und Raumseite aufgrund der gewählten Anordnung des Halterungsprofiles 6 zu vermeiden, kann der Verbindungssteg 12 des Halterungsprofiles 6 gelocht sein, wie dies in Fig. 25 im Mittelbereich des Querschnitts des Verbindungsstegs 12 angedeutet ist.

Fig. 26 zeigt im Gegensatz zu Fig. 25 zusätzliche Abwinklungen 134, 136 des Halterungsprofils 6, die auf der Raumseite der außenliegenden Scheibe 130 und der Wetterseite der innenliegenden Scheibe 132 zusätzlich angeordnet sind. Anstelle des Verbindungssteges 12, wie er in Fig. 25 gezeigt ist, kann das Halterungsprofil 6 unterbrochen sein und die Verbindung zwischen den somit entstehenden Teilprofilen 138, 140 durch ein druck- und zugfestes wärmeisolierendes Element 50 ersetzt werden. In diesem Fall ist das Halterungsprofil 6 getrennt in ein als Halteprofilteil dienendes Teilprofil 138 für die außenliegende Glasscheibe und ein ebenfalls als Halteprofilteil dienendes Teilprofil 140 für die innenliegende Glasscheibe. Die jeweiligen Glasscheibenränder der außenliegenden und innenliegenden Glasscheibe 130, 132 sind wiederum von der äußeren Abwinklung 8, der weiteren Abwinklung 134 bzw. von der inneren Abwinklung 10 und der weiteren Abwinklung 136 fest umfaßt. Als Bindung zwischen der äußeren 8 und der weiteren Abwinklung 134 bzw. der inneren Abwinklung 10 und der weiteren Abwinklung 136 dienen im Gegensatz zu Fig. 25 jeweils kürzere Verbindungsstege 12. Das die beiden Teilprofile 138, 140 druck- und zugfest verbindende, wärmeisolierende Kunststoffteil 50 ist in schwalbenschwanzförmige Ausnehmungen eingesetzt, die an den jeweils zum Zwischenraum der Doppelscheibe 128 weisenden Außenseiten der beiden weiteren Abwinklung 134, 136 ausgebildet sind.

Bei der in Fig. 26 gezeigten Ausführungsform der Erfindung wird die vorbestimmte Drehbewegung an der Verbindungsstelle zwischen dem Halterungsprofil 6 bzw. dem Teilprofil 140 und der Fassadenunterkonstruktion ermöglicht, d.h. daß die Drehachse in diesem Bereich angeordnet ist. Die Verbindungsstelle besteht wie in Fig. 25 aus einem Ansatzstück 16, welches in einer entsprechend geformten Ausnehmung der Fassadenunterkonstruktion 48 angeordnet ist. Das Ansatzstück 16 bildet durch seine Beabstandung von der inneren Abwinklung 10 und seine zum Glasscheibenrand, parallel zur Doppelglasscheibe verlaufende Erstreckung, selbst eine Ausnehmung. In diese Ausnehmung greift ein wie das Ansatzstück 16 geformtes Ansatzteil 144 ein. Das freie Ende des Ansatzstücks 16 und das freie Ende des Ansatzteils 144 weisen jeweils eine Verdickung auf, wodurch sich an der Verbindungsstelle ein Spiel zwischen den Verbindungsteilen ergibt. Die Verdrehung des Halterungsprofils 6 bzw. der Teilprofile 138, 140 werden wiederum durch die Elastizität der Verbindungsteile an der Verbindungsstelle und das vorhandene Spiel gewährleistet. Abhängig von den Materialeigenschaften des Kunststoffteils 50 kann sich auch in dessen Bereich eine zusätzliche Drehachse einstellen.

In einer alternativen Ausgestaltung kann das Halterungsprofil 6 im Bereich des Kunststoffteils 50 auch durchgehend ausgebildet sein, so daß sich ein Halterungsteil 6 wie es in Fig. 25 gezeigt ist ergeben würde, wobei noch zusätzlich an den bezeichneten Stellen die weiteren Abwinklungen 134, 136 angeordnet wären.

Die Fig. 27 und 28 zeigen stark schematisierte Querschnitte der erfindungsgemäßen Anordnung bei einer Einfachverglasung. Das an der Glasscheibe 116 angeordnete Halterunsprofil 6 weist in beiden Figuren eine sich an die innere Abwinklung 10 anschließende, bogenförmig ausgestaltete Ausnehmung aus. Die Verbindung zwischen dem Halterungsprofil 6 und einem Profilteil 118 besteht in Fig. 27 aus einem zwei bogenförmige Ansatzstücke aufweisenden Kunststoffteil 120. Das Profilteil 118 hat, wie die Ausnehmung des Halterungsprofils 6, ebenfalls eine bogenförmig ausgestaltete Ausnehmung. In diese beiden Ausnehmungen sind die bogenförmigen Ansatzstücke des Kunststoffteils 120 eingesetzt. Die Ausnehmungen umfassen dabei die bogenförmigen Ansatzstücke zu einem erheblichen Teil, so daß für eine sichere Lagerung des Kunststoffteils 120 gesorgt ist. Die erforderliche vorbestimmte Drehbewegung des Halterunsprofils 6 zusammen mit dem unteren Rand der Glasscheibe 116 wird zu einem großen Teil durch die, eine Art Drehgelenk darstellende Verbindung des Kunststoffteils 120 mit dem Halterungsprofil 6 bzw. dem Profilteil 118 ermöglicht. Zusätzlich ermöglicht wird die vorbestimmte Drehbewegung durch die Elastizität des Kunststoffteiles 120, da eine Verbiegung des Kunststoffteils 120 in dem die bogenförmigen Ansatzstücke verbindenden Bereich stattfinden kann. Um auftretende Momente im Bereich des unteren Glasscheibenrandes weitgehend zu vermeiden, ist das Kunststoffteil 120 möglichst nahe an der Glasscheibe 116 angeordnet.

In Fig. 28 ist eine Variante bezüglich Fig. 27 gezeigt, bei welcher ein das Halterungsprofil 6 und ein Profilteil 122 verbindendes Kunststoffteil 124 in eine Schwalbenschwanzförmige Ausnehmung des Profilteils 122 eingreift. Die vorbestimmte Drehbewegung kann demzufolge lediglich durch das bogenförmige Ansatzstück des Kunststoffteils 124 auf der Seite des Halterungsprofils 6 und den Verbindungsbereich des Kunststoffprofils 124 zwischen Halterungsprofil 6 und Profilteil 122 erfolgen. Das bogenförmige Ansatzstück des Kunststoffteils 124 erlaubt dabei im Zusammenspiel mit der bogenförmigen Ausnehmung im Bereich der inneren Abwinklung 10 eine Drehbewegung des Halterungsprofils 6, wobei sich zusätzlich der Verbindungsbereich des Kunststoffteils 124 aufgrund der vorhandenen Elastizität verbiegen kann und dadurch die vorbestimmte Drehbewegung unterstützt.

In Fig. 29 ist eine Draufsicht auf die Wetterseite der Glasscheibe 2 in einem Eckbereich mit an den Glasscheibenrändern durchlaufenden, bis in den Eckbereich sich erstreckenden Halterungsprofilen 6 gezeigt. Die Halterungsprofile 6 liegen im Eckbereich nicht aneinander, um so aufgrund der unterschiedlichen Dehnungen der Glasscheibe 2 und den Halterungsprofilen 6 keine Zwängungen im Eckbereich zwischen den Halterungsprofilen 6 hervorzurufen. Aus Gründen der Dichtigkeit und aus ästhetischen Gesichtspunkten ist im Eckbereich ein Eckformteil 126 vorgesehen, welches über die freien Enden der Halterungsprofile 6 übergeschoben und dort angeklipst ist. Eine ausreichende Überdeckung der freien Enden der Halterungsprofile 6 durch das Eckformteil 126 sorgt dafür, daß auch bei starken Verkürzungen der Halterungsprofile 6 diese nicht aus dem Eckformteil 128 heraustreten. In analoger Weise sind die freien Enden der Halterungsprofile 6 im Eckbereich so voneinander beabstandet, daß auch bei starken Dehnungen der Halterungsprofile 6 keine Zwängungen im Eckbereich entstehen können. Vorteilhafterweise ist das Eckformteil 126 der Farbe der Halterungsprofile 6 angepaßt und kann beispielsweise aus einem schwarzen Elastomerformteil oder aus entsprechend gefärbtem Edelstahl bestehen. Eine elastische Dichtmasse oder eine Verklebung sorgen für die notwendige Dichtung zwischen dem Eckformteil 126 und den Halterungsprofilen 6.

## Patentansprüche

1. Anordnung von Halterungsprofilen (6) zum Befestigen einer Glasscheibe (2; 34; 46; 108; 128; 148; 150; 152), insbesondere einer Außenwand- oder Dachverglasung, an einer Fassadenkonstruktion (48), die entlang wenigstens zweier gegenüberliegender Ränder der Glasscheibe (2; 34; 46; 108; 128; 148; 150; 152) verlaufen und diese von außen und innen mit je einer äußeren und inneren Abwinklung (8; 10) fest anliegend umfassen und an einem Teil der Fassadenunterkonstruktion (48) befestigt sind, wobei jedes Halterungsprofil (6) außerhalb des Glasscheibenrandes (4) so ausgebildet bzw. angeordnet bzw. abgestützt ist, daß es bei einer Durchbiegung der Glasscheibe (2; 34; 46; 108; 128; 148; 150; 152) eine vorbestimmte Drehbewegung um eine, zum Glasscheibenrand (4) parallele, außerhalb von diesem liegende Drehachse zuläßt.

2. Anordnung nach Anspruch 1, bei welcher die äußere Abwinklung (8) und/oder die innere Abwinklung (10) des Halterungsprofils (6) in einen abgesetzten Rand bzw. eine Stufe (20; 40) des Glasscheibenrandes (4) eingreift, so daß zumindest die Wetterseite der Glasscheibe (2; 34; 46; 108; 128; 148; 150; 152) und die Außenseite der äußeren Abwinklung (8) in einer Ebene liegen.

3. Anordnung nach einem der Ansprüche 1 bis 2, bei welcher das Halterungsprofil (6) vor der Anbringung vorgebogen ist, um den Glasscheibenrand (4) in dem Halterungsprofil (6) einzuspannen.

4. Anordnung nach einem der Ansprüche 1 bis 3, bei welcher zwischen dem Halterungsprofil (6) und dem Glasscheibenrand (4) formschlüssig ineinandergreifende Halterungseinrichtungen angeordnet sind.

5. Anordnung nach Anspruch 4, bei welcher als Halterungseinrichtung die äußere und/oder innere Abwinklung (8; 10) auf der der Glasscheibe (2; 34; 46; 108; 128; 148; 150; 152) zugewandten Fläche zumindest eine zum Glasscheibenrand (4) parallele, durchgehende oder unterbrochene Erhöhung (32) aufweisen, wobei der Glasscheibenrand (4) an den entsprechenden Stellen Rillen bzw. Vertiefungen aufweist.

6. Anordnung nach Anspruch 4, bei welcher als Halterungssicherung die äußere und/oder innere Abwinklung (8; 10) auf der der Glasscheibe (2; 34; 46; 108; 128; 148; 150; 152) zugewandten Fläche zumindest eine durchlaufende Rille oder Vertiefungen aufweisen, wobei der Glasscheibenrand (4) an den entsprechenden Stellen insbesondere mit Emaille hergestellte Erhöhungen (32) aufweist.

7. Anordnung nach Anspruch 1, bei welcher die Drehachse vom Glasscheibenrand (4) so gering wie möglich beabstandet angeordnet ist.

8. Anordnung nach Anspruch 1, bei welcher die Glasscheibe (150; 152) eine aus wenigstens zwei Einzelscheiben bestehende Verbundglasscheibe (150) oder eine aus Einzelscheiben mit dazwischen angeordneten photovoltaischen Elementen bestehende Glasscheibe (152) ist, wobei im Bereich zwischen der äußeren und inneren Abwinklung (8; 10) Mittel angeordnet sind, die ein Zusammenpressen des Glasscheibenrandes (4) aufgrund der Elastizität des zwischen den jeweiligen Einzelscheiben angeordneten Materials verhindern.

9. Anordnung nach Anspruch 8, bei welcher die Mittel zum Verhindern des Zusammenpressens aus einer druckfesten Einlage (154) bestehen, die jeweils zwischen den Einzelscheiben der Glasscheibe (150; 152), entsprechend der Stärke des jeweils zwischen den Einzelscheiben befindlichen Materials, angeordnet ist.

10. Anordnung nach Anspruch 8, bei welcher die Mittel zum Verhindern des Zusammenpressens aus zwischen die Einzelscheiben der Glasscheibe (150; 152) eingreifenden, freien Zapfen (156) bestehen, die fest mit dem Verbindungssteg (12) des Halterungsprofils (6) verbunden sind und in ihrer Querschnittsbreite der Stärke des jeweils zwischen den Einzelscheiben befindlichen Materials entsprechen.

11. Anordnung nach Anspruch 1, bei welcher die Glasscheibe (46; 108; 148) eine auf der Wetterseite angeordnete, außenliegende Glasscheibe (46; 108) einer Doppelverglasung (42; 104) oder eine auf der Wetterseite angeordnete, als Deckscheibe eines Paneels (146) dienende Glasscheibe (148) ist, wobei die Drehachse im Bereich der Doppelverglasung (42; 104) bzw. im Bereich des Paneels (146), vorteilhafterweise von der auf der Wetterseite angeordneten Glasscheibe (46; 108; 148) so gering wie möglich beabstandet, angeordnet ist.

12. Anordnung nach Anspruch 1, bei welcher die Glasscheibe (46; 108; 148) eine auf der Wetterseite angeordnete, außenliegende Glasscheibe (46; 108) einer Doppelverglasung (42; 104) oder eine auf der Wetterseite angeordnete, als Deckscheibe eines Paneels (146) dienende Glasscheibe (148) ist, wobei die Drehachse hinter der auf der Raumseite angeordneten, innenliegenden Glasscheibe (44; 106) bzw. hinter dem raumseitigen Abschluß des Paneels (146) und vorteilhafterweise so gering wie möglich von dieser bzw. diesem beabstandet angeordnet ist.

13. Anordnung nach Anspruch 11 oder 12, bei welcher die auf der Raumseite angeordnete, innenliegende Glasscheibe (44; 106) bzw. der hinter der Glasscheibe (148) angeordnete Bereich des Paneels (146) elastisch gebettet bzw. schwimmend gelagert ist.

14. Anordnung nach einem der Ansprüche 1, 7 oder 11 bis 13, bei welcher die Drehachse im Bereich eines den Wärmeübergang zwischen dem Halterungsprofil (6) und der Fassadenunterkonstruktion (48) verhindernden wärmeisolierenden Elements, insbesondere eines Kunststoffteils (50; 68; 80; 120; 124), und/oder im Bereich einer besonders ausgestalteten Verbindungsstelle zwischen dem Halterungsprofil (6) und der Fassadenunterkonstruktion (48) angeordnet ist, wobei das isolierende Element und/oder die Verbindungsstelle eine Übertragung von Momenten zum Glasscheibenrand (4) weitgehendst verhindern.

15. Anordnung nach Anspruch 14, bei welcher die Steifigkeit des isolierenden Elements um die sich ausbildende Drehachse möglichst gering ist.

16. Anordnung nach Anspruch 14 oder 15, bei welcher die Verbindungsstelle aus einem von der inneren Abwinklung (10) beabstandeten, sich parallel zur Glasscheibe (2; 34; 46; 108; 150; 152) in Richtung des Glasscheibenrandes (4) oder von diesem weg erstreckenden Ansatzstück (16; 90;) des Halterungsprofils (6), welches in eine entsprechend ausgeformte Aussparung eines Profilteils (98) der Fassadenunterkonstruktion (48) eingreift, und einem das Halterunsprofil (6) und das Ansatzstück (16; 90) verbindenden Verbindungsteil (14; 88) besteht, wobei das Ansatzstück (16; 90) und das Halterungsprofil (6) vorzugsweise Spiel aufweisen, um die vorbestimmte Drehbewegung des Halterungsprofils (6) durch das Spiel und/oder die Elastizität von Ansatzstück (16; 90) und Verbindungsteil (14; 88) zu ermöglichen.

17. Anordnung nach Anspruch 14, bei welcher die Verbindungsstelle aus einem Längsschiebegelenk, insbesondere in Form einer Steckverbindung mit einem senkrecht zur Scheibenebene verlaufenden Steg (94) und einer diesen umgreifenden Ausnehmung besteht, wobei zwischen dem Steg (94) und der Ausnehmung ein elastisches Material (96) angeordnet ist, um die vorbestimmte Drehbewegung des Halterungsprofils (6) durch die Anordnung des elastischen Materials (96) und/oder die Elastizität des Stegs (94) zu ermöglichen.

18. Anordnung nach einem der Ansprüche 1 bis 7, bei welcher die Glasscheibe eine Doppelglasscheibe (128) ist, die auf der Wetterseite der außenliegenden Glasscheibe (130) und auf der Raumseite der innenliegenden Glasscheibe (132) von dem Halterungsprofil (6) fest anliegend umfaßt ist.

19. Anordnung nach Anspruch 18, bei welcher das Halterungsprofil (6) zwei zusätzliche Abwinklungen (134; 136) aufweist, mit denen es die außenliegende Glasscheibe (130) auf der Raumseite bzw. die innenliegende Glasscheibe (132) auf der Wetterseite fest anliegend umfaßt, wobei das Halterungsprofil (6) in ein wetterseitiges und ein raumseitiges Teilprofil (138; 140) unterteilt ist und die Teilprofile (138; 140) durch ein druck- und zugfestes isolierendes Element, insbesondere ein Kunststoffteil (50), fest miteinander verbunden sind.

## Claims

1. Arrangement of holding profiles (6) for fastening a glass pane (2; 34; 46; 108; 128; 148; 150; 152), in particular an outer wall or roof glazing, to a facade construction (48), which holding profiles run along at least two opposite margins of the glass pane (2; 34; 46; 108; 128; 148; 150; 152) and enclasp these in tight bearing contact, from without and within, with an outer and inner angular deviation (8; 10) respectively and are fastened to a part of the facade sub-structure (48), each holding profile (6) being configured or disposed or supported outside the glass pane margin (4) in such a way that it allows, if the glass pane (2; 34; 46; 108; 128; 148; 150; 152) should sag, a pre-defined rotational movement about a rotational axis lying parallel to the glass pane margin (4) and outside this.

2. Arrangement according to Claim 1, in which the outer angular deviation (8) and/or the inner angular deviation (10) of the holding profile (6) engages in an offset margin or a step (20; 40) of the glass pane margin (4), so that at least the weather side of the glass pane (2; 34; 46; 108; 128; 148; 150; 152) and the outer side of the outer angular deviation (8) lie in one plane.

3. Arrangement according to one of Claims 1 to 2, in which the holding profile (6) is pre-bent, prior to attachment, in order to clamp the glass pane margin (4) in the holding profile (6).

4. Arrangement according to one of Claims 1 to 3, in which between the holding profile (6) and the glass pane margin (4) there are disposed positively interlocking holding mechanisms.

5. Arrangement according to Claim 4, in which, as the holding mechanism, the outer and/or inner angular deviation (8; 10) exhibit(s), on the face facing the glass pane (2; 34; 46; 108; 128; 148; 150; 152), at least one continuous or broken elevation (32) parallel to the glass pane margin (4), the glass pane margin (4) exhibiting, at the corresponding locations, channels or notches.

6. Arrangement according to Claim 4, in which, as the holding securement, the outer and/or inner angular deviation (8; 10) exhibit(s), on the face facing the glass pane (2; 34; 46; 108; 128; 148; 150; 152), at least one continuous channel or notches, the glass pane margin (4) exhibiting, at the corresponding locations, elevations (32) which are made, in particular, with enamel.

7. Arrangement according to Claim 1, in which the rotational axis is disposed at the least possible distance from the glass pane margin (4).

8. Arrangement according to Claim 1, in which the glass pane (150; 152) is a laminated glass pane (150) comprising at least two individual plates or a glass pane (152) comprising individual plates having photo-voltaic elements disposed therebetween, there being disposed in the region between the outer and inner angular deviation (8; 10) means which prevent the glass pane margin (4) from being compressed due to the elasticity of the material disposed between the respective individual plates.

9. Arrangement according to Claim 8, in which the compression-preventing means comprise a pressure-resistant inlay (154), which is disposed respectively between the individual plates of the glass pane (150; 152), corresponding to the thickness of the material respectively located between the individual plates.

10. Arrangement according to Claim 8, in which the compression-preventing means comprise free spigots (156) which reach in between the individual plates of the glass pane (150; 152) and are firmly connected to the connecting bar (12) of the holding profile (6) and correspond, in their cross-sectional width, to the thickness of the material respectively located between the individual plates.

11. Arrangement according to Claim 1, in which the glass pane (46; 108; 148) is an outer glass plate (46; 108), disposed on the weather side, of a doubleglazing (42; 104) or a glass pane (148) which is disposed on the weather side and serves as the cover plate of a panel (146), the rotational axis being disposed in the region of the double glazing (42; 104) or in the region of the panel (146), advantageously at the least possible distance from the glass pane (46; 108; 148) disposed on the weather side.

12. Arrangement according to Claim 1, in which the glass pane (46; 108; 148) is an outer glass plate (46; 108), disposed on the weather side, of a doubleglazing (42; 104), or a glass pane (148) which is disposed on the weather side and serves as the cover plate of a panel (146), the rotational axis being disposed behind the inner glass plate (44; 106) disposed on the room side or behind the room-side termination of the panel (146) and advantageously at the least possible distance from the said plate or termination of the panel.

13. Arrangement according to Claim 11 or 12, in which the inner glass plate (44; 106) disposed on the room side or the region of the panel (146) disposed behind the glass pane (148) is mounted in an elastically bedded or floating disposition.

14. Arrangement according to one of Claims 1, 7 or 11 to 13, in which the rotational axis is disposed in the region of a heat-insulating element preventing the transfer of heat between the holding profile (6) and the facade sub-structure (48), in particular of a synthetic part (50; 68; 80; 120; 124), and/or in the region of a specially designed connecting point between the holding profile (6) and the facade sub-structure (48), the insulating element and/or the connecting point very largely preventing a transmission of moments to the glass pane margin (4).

15. Arrangement according to Claim 14, in which the stiffness of the insulating element is as slight as possible around the developing rotational axis.

16. Arrangement according to Claim 14 or 15, in which the connecting point comprises an extension piece (16; 90) of the holding profile (6), which extension piece is distanced from the inner angular deviation (10) and extends parallel to the glass pane (2; 34; 46; 108; 150; 152) in the direction of the glass pane margin (4) or away from this and engages in a correspondingly formed-out cavity in a profiled part (98) of the facade substructure (48), and a connecting part (14; 88) connecting the holding profile (6) and the extension piece (16; 90), the extension piece (16; 90) and the holding profile (6) preferably exhibiting play to enable the pre-defined rotational movement of the holding profile (6) by virtue of the play and/or elasticity of the extension piece (16; 90) and connecting part (14; 88).

17. Arrangement according to Claim 14, in which the connecting point comprises a longitudinal sliding joint, in particular in the form of a plug connection having a bar (94) running perpendicular to the plane of the pane and a recess embracing the said bar, an elastic material (96) being disposed between the bar (94) and the recess to enable the pre-defined rotational movement of the holding profile (6) by virtue of the arrangement of the elastic material (96) and/or the elasticity of the bar (94).

18. Arrangement according to one of Claims 1 to 7, in which the glass pane is a double glass pane (128), which is enc-lasped in tight bearing contact, on the weather side of the outer glass plate (130) and on the room side of the inner glass plate (132), by the holding profile (6).

19. Arrangement according to Claim 18, in which the holding profile (6) exhibits two additional angular deviations (134; 136), by which it enclasps, in tight bearing contact, the outer glass plate (130) on the room side or the inner glass plate (132) on the weather side, the holding profile (6) being divided up into a weather-side and a room-side part profile (138; 140) and the part-profiles (138; 140) being firmly interconnected by a pressure-resistant and traction-resistant insulating element, in particular a synthetic part (50).

## Revendications

1. Structure de profilés de maintien (6) pour la fixation à une construction en façade (48) d'un vitrage (2 ; 34 ; 46 ; 108 ; 128 ; 148 ; 150 ; 152), d'une verrière de paroi ou de toit notamment, lesquels se développent le long d'au moins deux bords opposés du vitrage (2 ; 34 ; 46 ; 108 ; 128 ; 148 ; 150 ; 152), entourent jointivement solidement ceux-ci extérieurement et intérieurement par un repli angulaire respectid extérieur et intérieur (8 ; 10) et sont fixés à un élément de la construction inférieure de façade (48), chaque profilé de maintien (6) étant conçu, placé et soutenu à l'extérieur du bord du vitrage (4), de manière que, pour un fléchissement du vitrage (2 ; 34 ; 46 ; 108 ; 128 ; 148 ; 150 ; 152), il permette un mouvement de rotation prédéfini autour d'un axe de rotation parallèle au bord du vitrage (4) et situé à l'extérieur de celui-ci.

2. Structure selon la revendication 1, dans laquelle le repli angulaire externe (8) et/ou le repli angulaire interne (10) du profilé de maintien (6) vient en prise dans un bord en déport ou dans un redan (20 ; 40) du bord de vitrage (4), de manière qu'au moins le côté du vitrage (2 ; 34 ; 46 ; 108 ; 128 ; 148 ; 150 ; 152) exposé aux intempéries et la face externe (8) sont situés dans un plan.

3. Structure selon l'une des revendications 1 à 2, dans laquelle le profilé de maintien (6) est préplié avant la mise en place, en vue d'encastrer, dans le profilé de maintien (6), le bord du vitrage (4).

4. Structure selon une des revendications 1 à 3, dans laquelle, entre le profilé de maintien (6) et le bord du vitrage (4), sont placés les dispositifs de fixage se bloquant entre eux.

5. Structure selon la revendication 4, dans laquelle, comme dispositif de fixage, les replis angulaires externe et/ou interne (8 ; 10) présentent, sur la surface tournée vers le vitrage (2 ; 34 ; 46 ; 108 ; 128 ; 148 ; 150 ; 152), au moins un renflement (32) continu ou discontinu, parallèle au bord du vitrage (4), celui-ci présentant à des emplacements correspondants des gorges ou des évidements.

6. Structure selon la revendication 4, dans laquelle, comme dispositif de fixage, les replis angulaires externe et/ou interne (8 ; 10) présentent sur la face tournée vers le vitrage (2 ; 34 ; 46 ; 108 ; 108 ; 148 ; 150 ; 152) au moins une gorge cmntinue ou des évidements, le bord du vitrage (4) présentant à des emplacements correspondants des renflements réalisés en émail notamment.

7. Structure selon la revendication 1, dans laquelle l'axe de rotation est placé à une distance la plus faible possible du bord du vitrage (4).

8. Structure selon la revendication 1, dans laquelle le vitrage (150 ; 152) est un vitrage combiné (150) composé d'au moins deux vitres individuelles ou un vitrage (152) composé de vitres individuelles comportant des éléments photovoltaïques placés entre elles, des moyens étant mis en place dans la zone entre le repli angulaire (8 ; 10) externe et interne, qui, eu égard à l'élasticité du matériau placé entre les vitres respectives prises isolément, empêchent une compression des bords du vitrage (4).

9. Structure selon la revendication 8, dans laquelle les moyens utilisés pour empêcher la compression sont des garnitures résistant à la pression (154), qui sont placées entre les vitres du vitrage (150 ; 152) prises isolément et qui correspondent à l'épaisseur du matériau se trouvant respectivement entre celles-ci.

10. Structure selon la revendication 8, dans laquelle les moyens pour empêcher la compression consistent en des talons libres (156) venant en prise entre les vitres du vitrage (150 ; 152) prises isolément, qui sont reliés rigidement à la traverse de liaison (12) du profilé de maintien (6) et qui, quant à la largeur de leur section transversale, correspondent à l'épaisseur du matériau se trouvant respectivement entre les vitres prises isolément.

11. Structure selon la revendication 1, dans laquelle le vitrage (46 ; 108 ; 148) est un vitrage (46 ; 108) extérieur, placé du côté exposé aux intempéries, d'un vitrage double (42 ; 104) ou un vitrage (148), placé du côté exposé aux intempéries, servant de vitre de recouvrement d'un panneau (146), l'axe de rotation étant placé, dans la zone du vitrage double (42 ; 104) ou dans la zone du panneau (146), aussi près que possible du vitrage placé du côté exposé aux intempéries (46 ; 108 ; 148).

12. Structure selon la revendication 1, dans laquelle le vitrage (46 ; 108 ; 148) est un vitrage (46 ; 108) extérieur, placé du côté exposé aux intempéries, d'un vitrage double (42 ; 148) ou un vitrage (148) placé du côté exposé aux intempéries, servant de vitre de recouvrement d'un panneau (146), l'axe de rotation étant placé derrière le vitrage (44 ; 106) intérieur placé côté locaux ou derrière la bordure, côté locaux, du panneau et ce à une distance la plus faible possible de celui-ci ou de celle-ci.

13. Structure selon la revendication 11 ou 12, dans laquelle le vitrage intérieur (44 ; 106), placé côté locaux, ou le secteur du panneau (146) placé derrière le vitrage (148) est logé élastiquement ou de manière flottante.

14. Structure selon l'une des revendications 1, 7 ou 11 à 13, dans laquelle l'axe de rotation est placé dans la zone d'un élément calorifuge empêchant le transfert de chaleur entre le profilé de maintien (6) et la construction inférieure de façade (48), d'un élément en matière synthétique (50 ; 68 ; 80 ; 120 ; 124) notamment, et/ou dans la zone d'un emplacement de raccordement configuré spécialement entre le profil de maintien (6) et la construction inférieure de façade (48), l'élément isolant et/ou l'emplacement de raccordement empêchant dans une très large mesure l'application de moments sur le bord du vitrage (4).

15. Structure selon la revendication 14, dans laquelle la rigidité de l'élément isolant est aussi faible que possible autour de l'axe de rotation, qui se forme.

16. Structure selon la revendication 14 ou 15, dans laquelle l'emplacement de raccordement se compose d'une pièce ajoutée (16 ; 90) du profil de maintien (6), placée distante du repli angulaire intérieur (10), s'étendant parallèlement au vitrage (2 ; 34 ; 46 ; 108 ; 150 ; 152) en direction du bord (4) de celui-ci ou s'en éloignant, pièce ajoutée, qui vient en prise dans un évidement configuré en conséquence d'un élément profilé (98) de la construction inférieure de façade (48), ainsi que d'un élément de raccordement (14 ; 88) reliant le profilé de maintien (6) et la pièce ajoutée (16 ; 90), cette dernière et le profilé de maintien (6) présentant de préférence un jeu pour permettre le mouvement de rotation prédéfini du profilé de maintien (6), grâce au jeu et/ou à l'élasticité de la pièce ajoutée (16 ; 90) et de l'élément de raccordement (14 ; 88).

17. Structure selon la revendication 14, dans laquelle l'emplacement de raccordement se compose d'un joint coulissant longitudinalement, sous forme notamment d'un raccord enfichable comportant une traverse (94) perpendiculaire au plan du vitrage, ainsi que d'un évidement entourant celle-ci, un matériau élastique (96) étant placé entre la traverse (94) et l'évidement, afin de permettre le mouvement prédéfini de rotation du profilé de maintien (6) grâce à l'agencement du matériau élastique (96) et/ou à l'élasticité de la traverse (94).

18. Structure selon l'une des revendications 1 à 7, dans laquelle le vitrage est un vitrage double (128), qui est entouré solidement jointivement, côté soumis aux intempéries du vitrage (130) situé à l'extérieur et côté locaux du vitrage (132) situé à l'intérieur, par le profilé de maintien (6).

19. Structure selon la revendication 18, dans laquelle le profilé de maintien (6) comporte deux replis angulaires supplémentaires (134 ; 136), grâce auxquels il entoure solidement jointivement le vitrage situé à l'extérieur (130), côté locaux, et le vitrage (132) situé à l'intérieur, côté soumis aux intempéries, le profilé de maintien (6) étant partagé entre un profilé partiel (138) côté soumis aux intempéries et un profilé partiel (140) côté locaux et les profilés partiels (138 ; 140) étant raccordés rigidement entre eux par un élément isolant résistant à la pression et à la traction, un élément en matière synthétique (50) notamment.
